# EUROPEAN PATENT APPLICATION

(11) **EP 4 583 576 A1**
(43) Date of publication of application: **09.07.2025**
(21) Application number: 23870362.3
(22) Date of filing: 14.09.2023
(51) Int. Cl.: H04W 36/00

(54) **COMMUNICATION METHOD AND RELATED APPARATUS**

(30) Priority: 28.09.2022 CN 202211193807
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN)
(74) Representative: Thun, Clemens
(86) International application number: PCT/CN2023/118811
(87) International publication number: WO 2024/067126

(57) **Abstract**

This application provides a communication method and a related apparatus. A first access network device may receive a first message sent by a second access network device to determine first configuration information based on a first candidate information list and/or a second candidate information list that are/is included in the first message, and send the first configuration information to the second access network device, where the first configuration information is for a terminal device to communicate with the first access network device through a first target relay terminal, or the first configuration information is for the terminal device to communicate with the first access network device in a first target cell. In this way, a better switching link can be selected for the terminal device, so that the success rate of link switching of the terminal device in different access network devices can be improved.

## Description

This application claims priority to Chinese Patent Application No. 202211193807.2, filed with the China National Intellectual Property Administration on September 28, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Currently, a terminal device may be handed over from an indirect link to a direct link. For example, the terminal device is handed over from communicating with an access network device through a relay terminal to communicating with the access network device directly. Certainly, the terminal device may alternatively be handed over from the direct link to the indirect link. For example, the terminal device is handed over from communicating with the access network device directly to communicating with the access network device through the relay terminal. However, regardless of whether the terminal device is handed over from the indirect link to the direct link or from the direct link to the indirect link, it may be understood that the terminal device is handed over in a same access network device. In other words, a problem of how to hand over the terminal device in different access network devices still needs to be resolved.

### SUMMARY

This application provides a communication method and a related apparatus to improve the success rate of link switching of a terminal device in different access network devices.

According to a first aspect, a communication method is provided, including: A first access network device receives a first message sent by a second access network device, where the first message includes a first candidate information list and/or a second candidate information list, the first candidate information list includes information about one or more candidate relay terminals, the one or more candidate relay terminals are located in one or more cells served by the first access network device, and the second candidate information list includes information about one or more candidate cells served by the first access network device; the first access network device determines first configuration information based on the first candidate information list and/or the second candidate information list, where the first configuration information is used by a terminal device to communicate with the first access network device through a first target relay terminal, and the first target relay terminal is one of the one or more candidate relay terminals; or the first configuration information is used by a terminal device to communicate with the first access network device in a first target cell, and the first target cell is a cell in the one or more candidate cells; and the first access network device sends the first configuration information to the second access network device. It can be learned that the first access network device may receive the first message sent by the second access network device to determine the first configuration information based on the first candidate information list and/or the second candidate information list that are/is included in the first message. The first configuration information is used by the terminal device to communicate with the first access network device through the first target relay terminal. In this way, the first access network device may participate in selection of a target relay terminal in a target cell by using the first candidate information list, in other words, the first access network device may determine that a link to which the terminal device needs to be handed over is an indirect link. Alternatively, the first configuration information is used by the terminal device to communicate with the first access network device in the first target cell, and the first access network device may participate in selection of a target cell by using the second candidate information list, in other words, the first access network device may determine that a link to which the terminal device needs to be handed over is a direct link. In this way, a better switching link can be selected for the terminal device, so that the success rate of link switching of the terminal device in different access network devices can be improved. In addition, the first configuration information is sent to the second access network device, so that the terminal device can obtain the first configuration information from the second access network device, and further can communicate with the second access network device.

In this application, information about a candidate relay terminal may include at least one of the following: an identifier of the candidate relay terminal, signal quality on a link between the terminal device and the candidate relay terminal, or an identifier of a serving cell of the candidate relay terminal.

Optionally, the identifier of the candidate relay terminal may include, for example, one or more of the following: a system architecture evolution temporary mobile subscriber identity (system architecture evolution, SAE, temporary mobile station identifier, S-TMSI), a globally unique temporary identity (globally unique temporary identity, GUTI), a subscriber permanent identifier (subscription permanent identifier, SUPI), an access network temporary identifier (radio network temporary identifier, RNTI), a layer-2 identifier (layer-2 ID), and a local identifier allocated by a network device to the candidate relay terminal.

The signal quality on the link between the terminal device and the candidate relay terminal may include at least one of the following: reference signal received power (reference signal received power, RSRP), reference signal received quality (reference signal received quality, RSRQ), or a signal to interference plus noise ratio (signal to interference plus noise ratio, SINR). In a possible implementation, the link between the terminal device and the candidate relay terminal is a sidelink (sidelink, SL). The signal quality on the sidelink between the terminal device and the candidate relay terminal may also be referred to as signal quality on a PC5 interface between the terminal device and the candidate relay terminal.

It should be noted that the SL is defined for direct communication between terminal devices, in other words, is a link by using which the terminal devices directly communicate with each other without forwarding by a base station. An interface between terminal devices may be referred to as a PC5 interface.

Optionally, the identifier of the serving cell of the candidate relay terminal may include, for example, at least one of the following: a new radio cell identity (NR cell identity, NCI) or an NR cell global identifier (NR cell global identifier, NCGI).

Optionally, the information about the candidate relay terminal in the first candidate information list may be, for example, information about all candidate relay terminals reported by the terminal device, or the information about the candidate relay terminal in the first candidate information list may be, for example, information about some candidate relay terminals in the candidate relay terminals reported by the terminal device.

It should be noted that in this application, the information about the candidate relay terminal in the first candidate information list may be the same as or partially the same as the information about the corresponding candidate relay terminal reported by the terminal device.

That a plurality of candidate relay terminals are located in one or more cells served by the first access network device may be understood as one of the following: The plurality of candidate relay terminals are located in one cell served by the first access network device, different candidate relay terminals in the plurality of candidate relay terminals are located in different cells served by the first access network device, and some of the plurality of candidate relay terminals are located in one cell served by the first access network device and some other of the plurality of candidate relay terminals are located in another cell served by the first access network device. It should be understood that a protocol may limit that candidate relay terminals in the first candidate information list have to be located in one cell, or may not limit that candidate relay terminals in the first candidate information list have to be located in one cell. In this case, different candidate relay terminals in the plurality of candidate relay terminals are located in different cells served by the first access network device, or some of the plurality of candidate relay terminals are located in one cell served by the first access network device and some other of the plurality of candidate relay terminals are located in another cell served by the first access network device.

In this application, information about a candidate cell may include at least one of the following: an identifier of the candidate cell or signal quality between the terminal device and the first access network device in the candidate cell. The signal quality between the terminal device and the first access network device in the candidate cell may include at least one of the following: a reference signal received power, reference signal received quality, or a signal to interference plus noise ratio. It should be understood that the signal quality between the terminal device and the first access network device in the candidate cell may also be referred to as signal quality between the terminal device and the first access network device on a Uu interface in the candidate cell. The identifier of the candidate cell may include, for example, at least one of the following: an NCI or an NCGI.

Optionally, information about candidate cells in the second candidate information list may be, for example, information about all candidate cells reported by the terminal device, or information about candidate cells in the second candidate information list may be, for example, information about some candidate cells in the candidate cells reported by the terminal device.

It should be noted that in this application, the information about the candidate cell in the second candidate information list may be the same as or partially the same as the information about the corresponding candidate cell reported by the terminal device.

Optionally, with reference to the first aspect, before the first access network device determines the first configuration information based on the first candidate information list and/or the second candidate information list, the method further includes: The first access network device determines the first target relay terminal based on the first candidate information list, where the first target relay terminal is one of the plurality of candidate relay terminals. This means that the first access network device may participate in selection of a target relay terminal in a target cell by using the first candidate information list, in other words, the first access network device may determine that a link to which the terminal device needs to be handed over is an indirect link. In this way, a better switching link can be selected for the terminal device, so that the success rate of link switching of the terminal device in different access network devices can be improved.

Optionally, if the first configuration information is used by the terminal device to communicate with the first access network device through the first target relay terminal, the first configuration information may include, for example, an end-to-end bearer configuration between the terminal device and the first access network device, a radio link control (radio link control, RLC) bearer configuration between the terminal device and the first target relay terminal, and a mapping relationship between an end-to-end bearer and an RLC bearer.

In this application, the RLC bearer is a protocol entity and a configuration below an RLC layer, is a lower-layer part of a radio bearer (radio bearer, RB), and includes a series of resources such as an RLC layer entity and a logical channel. The RLC bearer may be classified as an RLC bearer between a terminal device and an access network device and an RLC bearer between terminal devices.

In this application, the end-to-end bearer is a protocol entity and a configuration above an RLC layer, is an upper-layer part of an RB, and includes a series of resources such as a packet data convergence protocol (packet data convergence protocol, PDCP) layer entity.

Optionally, if the first configuration information is used by the terminal device to communicate with the first access network device in the first target cell, the first configuration information may include, for example, at least one of the following: a radio bearer configuration between the terminal device and the first access network device, an RLC bearer configuration between the terminal device and the first access network device, or a configuration required by the terminal device to access a target access network device through random access.

Optionally, with reference to the first aspect, before the first access network device determines the first configuration information based on the first candidate information list and/or the second candidate information list, the method further includes: The first access network device determines the first target cell based on the second candidate information list. This means that the first access network device may further participate in selection of the target cell by using the second candidate information list, in other words, the first access network device may determine that a link to which the terminal device needs to be handed over is a direct link. In this way, a better switching link can be selected for the terminal device, so that the success rate of link switching of the terminal device in different access network devices can be increased.

Optionally, with reference to the first aspect, the first message further includes a first identifier. The first identifier includes at least one of the following: an identifier predefined in a protocol, an identifier of a cell in which any one of one or more candidate relay terminals reported by the terminal device is located, an identifier of any candidate cell reported by the terminal device, an identifier of a cell recommended by the second access network device to the first access network device, or a random value determined by the second access network device. The first message may be, for example, a handover request message. The first identifier may be, for example, a target cell global identifier (target cell global ID) in the handover request message. This is equivalent to reusing the handover request message. This may be compatible with the existing protocol, reduce impact on an existing protocol, and improve backward compatibility of the protocol.

Optionally, the identifier of the cell recommended by the second access network device to the first access network device may include at least one of the following: an identifier of a cell in which one or more of the candidate relay terminals reported by the terminal device are located, or an identifier of a candidate cell reported by the terminal device.

For example, if the first message includes the first candidate information list, the first identifier includes at least one of the following: the identifier predefined in the protocol, the identifier of the cell in which any one of the one or more candidate relay terminals reported by the terminal device is located, the identifier of the cell recommended by the second access network device to the first access network device, or the random value determined by the second access network device. Optionally, the identifier of the cell in which any one of the one or more candidate relay terminals reported by the terminal device is located may be included in the first candidate information list. The identifier of the cell recommended by the second access network device to the first access network device may be an identifier of a cell in which one or more of the candidate relay terminals reported by the terminal device are located. In this case, in a possible implementation, an identifier of a cell in which one or more of the candidate relay terminals reported by the terminal device are located may be included in the first candidate information list.

For another example, if the first message includes the second candidate information list, the first identifier includes at least one of the following: the identifier predefined in the protocol, the identifier of the cell in which any one of the one or more candidate relay terminals reported by the terminal device is located, the identifier of any candidate cell reported by the terminal device, the identifier of the cell recommended by the second access network device to the first access network device, or the random value determined by the second access network device. Optionally, the identifier of any candidate cell reported by the terminal device may be included in the second candidate information list. The identifier of the cell recommended by the second access network device to the first access network device may be an identifier of a candidate cell reported by the terminal device. In this case, in a possible implementation, information about a candidate cell reported by the terminal device may be included in the second candidate information list.

For another example, if the first message includes the first candidate information list and the second candidate information list, the first identifier includes at least one of the following: the identifier predefined in the protocol, the identifier of any candidate cell reported by the terminal device, the identifier of the cell recommended by the second access network device to the first access network device, or the random value determined by the second access network device. Optionally, the identifier of the cell in which any one of the one or more candidate relay terminals reported by the terminal device is located may be included in the first candidate information list, and the identifier of any candidate cell reported by the terminal device may be included in the second candidate information list. The identifier of the cell recommended by the second access network device to the first access network device may include an identifier of a cell in which one or more of the candidate relay terminals reported by the terminal device are located and an identifier of a candidate cell reported by the terminal device. In this case, in a possible implementation, information about a cell in which one or more of the candidate relay terminals reported by the terminal device are located may be included in the first candidate information list, and information about a candidate cell reported by the terminal device may be included in the second candidate information list.

Optionally, with reference to the first aspect, if the first identifier includes at least one of the following: the identifier predefined in the protocol, the identifier of the cell in which any one of the one or more candidate relay terminals reported by the terminal device is located, the identifier of any candidate cell reported by the terminal device, or the random value determined by the second access network device, the first access network device ignores a cell indicated by the first identifier. It can be learned that when the first identifier includes at least one of the following: the identifier predefined in the protocol, the identifier of the cell in which any one of the one or more candidate relay terminals reported by the terminal device is located, or the identifier of any candidate cell reported by the terminal device, the first access network device may ignore the cell indicated by the first identifier, so that the first access network device does not refer to the cell indicated by the first identifier when participating in selection of a target relay terminal in a target cell or when participating in selection of a target cell.

Optionally, with reference to the first aspect, if the first access network device obtains the first candidate information list and/or the second candidate information list, the first access network device ignores the cell indicated by the first identifier. It can be learned that when the first access network device obtains the first candidate information list and/or the second candidate information list, regardless of what the first identifier indicates, the first access network device directly ignores the cell indicated by the first identifier, so that the first access network device does not refer to the cell indicated by the first identifier when participating in selection of a target relay terminal in a target cell or when participating in selection of a target cell.

Optionally, with reference to the first aspect, if the first identifier is the identifier of the cell recommended by the second access network device to the first access network device, that the first access network device determines the first target relay terminal based on the first candidate information list includes: The first access network device determines the first target relay terminal based on the first candidate information list and the cell indicated by the first identifier. It can be learned that when the first identifier is the identifier of the cell recommended by the second access network device to the first access network device, the first access network device may determine the first target relay terminal based on the first candidate information list and the cell indicated by the first identifier. This indicates that the first access network device may further refer to the cell indicated by the first identifier when participating in selection of a target relay terminal in a target cell.

Optionally, with reference to the first aspect, if the first identifier is the identifier of the cell recommended by the second access network device to the first access network device, that the first access network device determines the first target cell based on the second candidate information list includes: The first access network device determines the first target cell based on the second candidate information list and the cell indicated by the first identifier. It can be learned that when the first identifier is the identifier of the cell recommended by the second access network device to the first access network device, the first access network device may determine the first target cell based on the second candidate information list and the cell indicated by the first identifier. This indicates that the first access network device may further refer to the cell indicated by the first identifier when participating in selection of a cell.

Optionally, with reference to the first aspect, the first message further includes first indication information. The first indication information indicates that the first identifier is the identifier predefined in the protocol; or the first indication information indicates that the first identifier is the identifier of the cell in which any one of the one or more candidate relay terminals reported by the terminal device is located; or the first indication information indicates that the first identifier is the identifier of any candidate cell reported by the terminal device; or the first indication information indicates that the first identifier is the identifier of the cell recommended by the second access network device to the first access network device; or the first indication information indicates that the first identifier is the random value determined by the second access network device. It can be learned that when the first identifier includes at least one of the following: the identifier predefined in the protocol, the identifier of the cell in which any one of the one or more candidate relay terminals reported by the terminal device is located, the identifier of any candidate cell reported by the terminal device, the identifier of the cell recommended by the second access network device to the first access network device, or the random value determined by the second access network device, the first access network device can learn of a specific type of the first identifier by using the first indication information.

According to a second aspect, a communication method is provided, including: A second access network device receives information about one or more candidate relay terminals reported by a terminal device and/or information about one or more candidate cells reported by the terminal device; the second access network device determines a first candidate information list and/or a second candidate information list based on the information about the one or more candidate relay terminals reported by the terminal device and/or the information about the one or more candidate cells reported by the terminal device, where the first candidate information list includes information about one or more candidate relay terminals, the one or more candidate relay terminals are located in one or more cells served by a first access network device, and the second candidate information list includes information about one or more candidate cells served by the first access network device; the second access network device sends a first message to the first access network device, where the first message includes the first candidate information list and/or the second candidate information list; the second access network device receives first configuration information sent by the first access network device, where the first configuration information is used by the terminal device to communicate with the first access network device through a first target relay terminal, and the first target relay terminal is one of the plurality of candidate relay terminals; or the first configuration information is used by the terminal device to communicate with the first access network device in a first target cell, and the first target cell is a cell in the one or more candidate cells; and the second access network device sends the first configuration information to the terminal device.

That the second access network device determines a first candidate information list based on the information about the one or more candidate relay terminals reported by the terminal device and/or the information about the one or more candidate cells reported by the terminal device may be understood that the second access network device determines the first candidate information list based on the information about the one or more candidate relay terminals reported by the terminal device or the second access network device determines the first candidate information list based on the information about the one or more candidate relay terminals reported by the terminal device and the information about the one or more candidate cells reported by the terminal device. Similarly, that the second access network device determines a second candidate information list based on the information about the one or more candidate relay terminals reported by the terminal device and/or the information about the one or more candidate cells reported by the terminal device may be understood that the second access network device determines the second candidate information list based on the information about the one or more candidate cells reported by the terminal device or the second access network device determines the second candidate information list based on the information about the one or more candidate relay terminals reported by the terminal device and the information about the one or more candidate cells reported by the terminal device.

Optionally, with reference to the second aspect, the first message further includes a first identifier. The first identifier includes at least one of the following: an identifier predefined in a protocol, an identifier of a cell in which any one of one or more candidate relay terminals reported by the terminal device is located, an identifier of any candidate cell reported by the terminal device, an identifier of a cell recommended by the second access network device to the first access network device, or a random value determined by the second access network device.

Optionally, with reference to the second aspect, the first message further includes first indication information. The first indication information indicates that the first identifier is the identifier predefined in the protocol; or the first indication information indicates that the first identifier is the identifier of the cell in which any one of the one or more candidate relay terminals reported by the terminal device is located; or the first indication information indicates that the first identifier is the identifier of any candidate cell reported by the terminal device; or the first indication information indicates that the first identifier is the identifier of the cell recommended by the second access network device to the first access network device; or the first indication information indicates that the first identifier is the random value determined by the second access network device.

According to a third aspect, a communication method is provided, including: A terminal device reports information about one or more candidate relay terminals and information about one or more candidate cells to a second access network device; the terminal device receives first configuration information sent by the second access network device; and the terminal device communicates with a first access network device through a first target relay terminal based on the first configuration information, or the terminal device communicates with the first access network device in a first target cell based on the first configuration information, where the first configuration information is determined by the first access network device based on a first message sent by the second access network device, the first message includes a first candidate information list and/or a second candidate information list, the first candidate information list is determined by the second access network device based on the information about the one or more candidate relay terminals reported by the terminal device, and the second candidate information list is determined by the second access network device based on the information about the one or more candidate cells reported by the terminal device; the first candidate information list includes information about one or more candidate relay terminals, the one or more candidate relay terminals are located in one or more cells served by the first access network device, and the first target relay terminal is one of the one or more candidate relay terminals; and the second candidate information list includes information about one or more candidate cells served by the first access network device, and the first target cell is a cell in the one or more candidate cells.

Optionally, with reference to the third aspect, the first message further includes a first identifier. The first identifier includes at least one of the following: an identifier predefined in a protocol, an identifier of a cell in which any one of the one or more candidate relay terminals reported by the terminal device is located, an identifier of any candidate cell reported by the terminal device, an identifier of a cell recommended by the second access network device to the first access network device, or a random value determined by the second access network device.

Optionally, with reference to the third aspect, the first message further includes first indication information. The first indication information indicates that the first identifier is the identifier predefined in the protocol; or the first indication information indicates that the first identifier is the identifier of the cell in which any one of the one or more candidate relay terminals reported by the terminal device is located; or the first indication information indicates that the first identifier is the identifier of any candidate cell reported by the terminal device; or the first indication information indicates that the first identifier is the identifier of the cell recommended by the second access network device to the first access network device; or the first indication information indicates that the first identifier is the random value determined by the second access network device.

According to a fourth aspect, a communication method is provided, including: A second access network device receives information about one or more candidate relay terminals reported by a terminal device and/or information about one or more candidate cells reported by the terminal device; the second access network device determines a first candidate information list and/or a second candidate information list based on the information about the one or more candidate relay terminals reported by the terminal device and/or the information about the one or more candidate cells reported by the terminal device, where the first candidate information list includes information about one or more candidate relay terminals, the one or more candidate relay terminals are located in one or more cells served by a first access network device, and the second candidate information list includes information about one or more candidate cells served by the first access network device; the second access network device sends a first message to the first access network device, where the first message includes the first candidate information list and/or the second candidate information list; the first access network device determines first configuration information based on the first candidate information list and/or the second candidate information list, where the first configuration information is used by the terminal device to communicate with the first access network device through a first target relay terminal, and the first target relay terminal is one of the one or more candidate relay terminals; or the first configuration information is used by the terminal device to communicate with the first access network device in a first target cell, and the first target cell is a cell in one or more candidate cells; the first access network device sends the first configuration information to the second access network device; and the second access network device sends the first configuration information to the terminal device.

Optionally, with reference to the fourth aspect, before the first access network device determines the first configuration information based on the first candidate information list and/or the second candidate information list, the method further includes: The first access network device determines the first target relay terminal based on the first candidate information list, where a serving cell of the first target relay terminal is one of the one or more cells.

Optionally, with reference to the fourth aspect, before the first access network device determines the first configuration information based on the first candidate information list and/or the second candidate information list, the method further includes: The first access network device determines the first target cell based on the second candidate information list.

Optionally, with reference to the fourth aspect, the first message further includes a first identifier. The first identifier includes at least one of the following: an identifier predefined in a protocol, an identifier of a cell in which any one of the one or more candidate relay terminals reported by the terminal device is located, an identifier of any candidate cell reported by the terminal device, an identifier of a cell recommended by the second access network device to the first access network device, or a random value determined by the second access network device.

Optionally, with reference to the fourth aspect, if the first identifier is the identifier of the cell recommended by the second access network device to the first access network device, that the first access network device determines the first target relay terminal based on the first candidate information list includes: The first access network device determines the first target relay terminal based on the first candidate information list and a cell indicated by the first identifier.

Optionally, with reference to the fourth aspect, if the first identifier is the identifier of the cell recommended by the second access network device to the first access network device, that the first access network device determines the first target cell based on the second candidate information list includes: The first access network device determines the first target cell based on the second candidate information list and the cell indicated by the first identifier.

According to a fifth aspect, a communication apparatus is provided. The communication apparatus includes a module configured to perform the method according to any one of the first aspect, the second aspect, the third aspect, or the fourth aspect.

According to a sixth aspect, a communication apparatus is provided, including a processor. The processor is coupled to a memory. The memory stores a computer program. The processor is configured to invoke the computer program in the memory, so that the communication apparatus performs the method according to any one of the first aspect, the second aspect, the third aspect, or the fourth aspect.

In a possible design, the communication apparatus may be a chip or a device including a chip that implements the method according to the first aspect, the second aspect, the third aspect, or the fourth aspect.

According to a seventh aspect, a communication apparatus is provided, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to the first aspect, the second aspect, the third aspect, or the fourth aspect by using a logic circuit or by executing code instructions.

According to an eighth aspect, a computer-readable storage medium is provided. The storage medium stores a computer program or instructions. When the computer program or instructions are executed by a computer, the method according to any one of the first aspect, the second aspect, the third aspect, or the fourth aspect is implemented.

According to a ninth aspect, a computer program product is provided. When a computer reads and executes the computer program product, the computer is enabled to perform the method according to any one of the first aspect, the second aspect, the third aspect, or the fourth aspect.

According to a tenth aspect, a communication system is provided. The communication system includes one or more of the following: a first access network device performing the method according to any possible implementation of the first aspect and a second access network device performing the method according to any possible implementation of the second aspect. Optionally, the communication system may further include a terminal device performing the method according to any possible implementation of the third aspect.

### BRIEF DESCRIPTION OF DRAWINGS

The following briefly describes the accompanying drawings used for describing embodiments.
FIG. 1 shows a basic architecture of a communication system according to an embodiment of this application;
FIG. 2 is a diagram of a hardware structure of a communication apparatus applicable to an embodiment of this application;
FIG. 3A is a schematic flowchart of a communication method according to an embodiment of this application;
FIG. 3B is a schematic flowchart of another communication method according to an embodiment of this application;
FIG. 3C is a schematic flowchart of another communication method according to an embodiment of this application;
FIG. 3D is a schematic flowchart of another communication method according to an embodiment of this application;
FIG. 3E is a schematic flowchart of another communication method according to an embodiment of this application;
FIG. 4 is a diagram of a structure of a communication apparatus according to an embodiment of this application;
FIG. 5 is a simplified diagram of a structure of a terminal device according to an embodiment of this application; and
FIG. 6 is a simplified diagram of a structure of an access network device according to an embodiment of this application.

### DESCRIPTION OF EMBODIMENTS

The following describes technical solutions in embodiments of this application with reference to the accompanying drawings in embodiments of this application. The terms "system" and "network" in embodiments of this application may be used interchangeably. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one of a, b, or c may represent a, b, c, a and b, a and c, b and c, or a, b, and c, where a, b, and c may be singular or plural. In addition, to clearly describe the technical solutions in embodiments of this application, the terms such as "first" and "second" are used in embodiment of this application to distinguish between same items or similar items having basically same network elements or effects. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, or improvement made based on the technical solutions of this application shall fall within the protection scope of this application.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It should be understood that the technical solutions in embodiments of this application are applicable to a long term evolution (long term evolution, LTE) architecture, a 5^{th} generation mobile communication technology (5^{th} generation mobile networks, 5G), a wireless local area network (wireless local area networks, WLAN) system, a V2X communication system, and the like. The technical solutions in embodiments of this application are further applicable to another future communication system, for example, a 6G communication system. In the future communication system, a same function may be maintained, but a name may be changed.

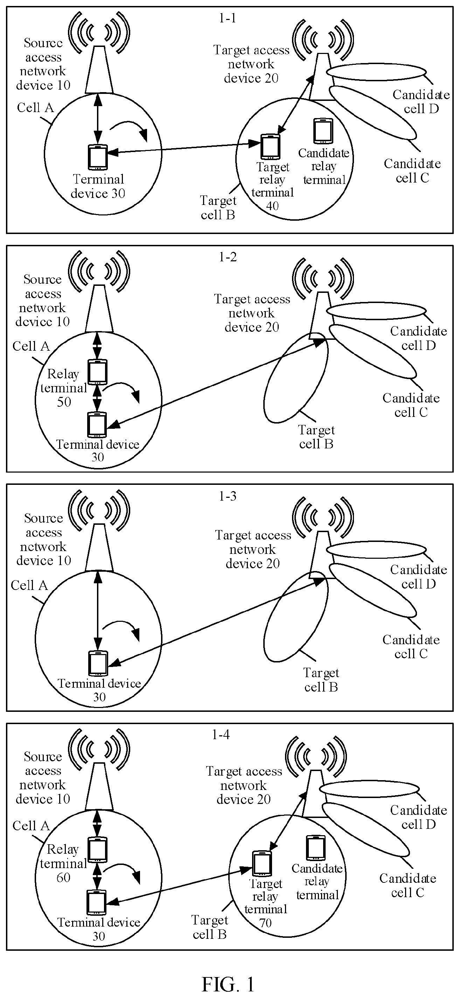

The following describes a basic architecture of a communication system provided in embodiments of this application. FIG. 1 shows a basic architecture of a communication system according to an embodiment of this application. It should be noted that in this application, a direct (direct) link (link) or path (path) is a link or path on which a terminal device communicates with an access network device, and an indirect (indirect) link is a link or path on which the terminal device communicates with an access network device through a relay terminal.

With reference to 1-1 in FIG. 1, it can be learned that this embodiment of this application is applicable to switching from a direct link on which a terminal device 30 communicates with a source access network device 10 to an indirect link on which the terminal device 30 communicates with a target access network device 20 through a target relay terminal (relay user equipment, Relay UE) 40. In a cell A of the source access network device 10, the terminal device 30 may communicate with the source access network device 10 on the direct link. When the terminal device 30 performs communication through the relay terminal 40, the terminal device 30 may also be referred to as a remote terminal (remote UE) or a remote terminal device. When link quality of the direct link between the terminal device 30 and the source access network device 10 is less than or equal to a first preset threshold, the terminal device 30 needs to be handed over from the direct link on which the terminal device 30 communicates with the source access network device 10 to the indirect link on which the terminal device 30 communicates with the target access network device 20 through the target relay terminal 40. The first preset threshold may be predefined in a protocol, or may be configured by the source access network device for the terminal device, or may be a constant value. This is not limited herein. For example, a cell served by the target access network device 20 may include, for example, one or more candidate cells, such as a candidate cell C and a candidate cell D. In this application, a candidate cell may be used as a candidate of a target cell, that is, the target cell may be determined from one or more candidate cells. For example, in 1-1 in FIG. 1, a target cell B is actually determined from one or more candidate cells. Further, each candidate cell includes one or more candidate relay terminals. For example, the candidate cell C or the candidate cell D may include one or more candidate relay terminals (not shown in 1-1 in FIG. 1). In this application, a candidate relay terminal may be used as a candidate of a target relay terminal, that is, the target relay terminal may be determined from one or more candidate relay terminals. It should be noted that after the target cell B is determined, the target relay terminal 40 in the target cell B further needs to be determined.

With reference to 1-2 in FIG. 1, it can be learned that this embodiment of this application is also applicable to a scenario in which an indirect link on which the terminal device 30 communicates with the source access network device 10 through a relay terminal 50 is handed over to a direct link on which the terminal device 30 communicates with the target access network device 20. Specifically, in the cell A of the source access network device 10, the terminal device 30 may communicate with the source access network device 10 on the indirect link through the relay terminal 50. When link quality of the indirect link on which the terminal device 30 communicates with the source access network device 10 through the relay terminal 50 is less than or equal to a second preset threshold, the terminal device 30 needs to be handed over from the indirect link on which the terminal device 30 communicates with the source access network device 10 through the relay terminal 50 to the direct link on which the terminal device 30 communicates with the target access network device 20 in the target cell B. The second preset threshold may be predefined in a protocol, or may be configured by the source access network device for the terminal device, or may be a constant value. This is not limited herein. For example, a cell served by the target access network device 20 may include, for example, one or more candidate cells, such as a candidate cell C and a candidate cell D. The target cell B is actually determined from one or more candidate cells.

With reference to 1-3 in FIG. 1, it can be learned that this embodiment of this application is further applicable to a scenario in which a direct link on which the terminal device 30 communicates with the source access network device 10 is switched to a direct link on which the terminal device 30 communicates with the target access network device 20. Specifically, in the cell A of the source access network device 10, the terminal device 30 may communicate with the source access network device 10 on the direct link. When link quality of the direct link between the terminal device 30 and the source access network device 10 is less than or equal to the first preset threshold, the terminal device 30 needs to be handed over from the direct link on which the terminal device 30 communicates with the source access network device 10 to the direct link on which the terminal device 30 communicates with the target access network device 20 in the target cell B. For a manner of determining the target cell B, refer to 1-2 in FIG. 1.

With reference to 1-4 in FIG. 1, it can be learned that this embodiment of this application is further applicable to a scenario in which an indirect link on which the terminal device 30 communicates with the source access network device 10 through a relay terminal 60 is switched to an indirect link on which the terminal device 30 communicates with the target access network device 20 through a target relay terminal 70. Specifically, in the cell A of the source access network device 10, the terminal device 30 may communicate with the source access network device 10 on the indirect link through the relay terminal 60. When link quality of the indirect link on which the terminal device 30 communicates with the source access network device 10 through the relay terminal 60 is less than or equal to the second preset threshold, the terminal device 30 needs to be handed over from the indirect link on which the terminal device 30 communicates with the source access network device 10 through the relay terminal 60 to the indirect link on which the terminal device 30 communicates with the target access network device 20 through the target relay terminal 70.

It should be noted that in this application, a relay terminal (for example, the target relay terminal 40, the target relay terminal 50, a candidate relay terminal, the relay terminal 50, or the relay terminal 60) may perform sidelink communication with the terminal device 30. The SL is defined for direct communication between terminal devices, in other words, is a link by using which the terminal devices directly communicate with each other without forwarding by a base station. An interface between terminal devices is used for direct communication between the terminal devices, and the interface between the terminal devices may be referred to as a PC5 interface. It may be understood that FIG. 1 is merely a diagram, and does not constitute a limitation on an application scenario of the technical solutions provided in this application. The source access network device 10 or the target access network device 20 in FIG. 1 is an entity that is on a network side and that is configured to send a signal, or receive a signal, or send and receive a signal. The source access network device 10 or the target access network device 20 may be an apparatus that is deployed in a radio access network (radio access network, RAN) and that provides a wireless communication function for a terminal device, for example, may be a transmission reception point (transmission reception point, TRP), a base station, or a control node in various forms, for example, a network controller, a radio controller, or a radio controller in a cloud radio access network (cloud radio access network, CRAN) scenario. Specifically, the source access network device 10 or the target access network device 20 may be a macro base station, a micro base station (also referred to as a small station), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU), a transmission point (transmitting and receiving point, TRP), a transmitting point (transmitting point, TP), a mobile switching center, a satellite, an uncrewed aerial vehicle, or the like in various forms, or may be an antenna panel of a base station. The control node may be connected to a plurality of base stations, and configure resources for a plurality of terminals covered by the plurality of base stations. In systems using different radio access technologies, names of devices with the base station function may be different. For example, the access network device may be a gNB in 5G, a network side device in a network after 5G, an access network device in a future evolved public land mobile (communication) network (public land mobile network, PLMN), or a device that has a base station function in device-to-device (Device-to-Device, D2D) communication, machine-to-machine (Machine-to-Machine, M2M) communication, or internet of vehicles communication. A specific name of the access network device is not limited in this application. In addition, the source access network device 10 or the target access network device 20 may further include a distributed unit (distributed unit, DU) and a central unit (central unit, CU).

A target relay terminal (for example, the target relay terminal 40 or the target relay terminal 50), a candidate relay terminal, a relay terminal (for example, the relay terminal 50 or the relay terminal 60), or the terminal device 30 in FIG. 1 is an entity that is on a user side and that is configured to receive a signal, or send a signal, or receive and send a signal. The target relay terminal, the candidate relay terminal, the relay terminal, or the terminal device 30 is configured to provide one or more of a voice service and a data connectivity service for a user. The target relay terminal, the candidate relay terminal, the relay terminal, or the terminal device 30 may be a device that includes a wireless transceiver function and that can cooperate with an access network device to provide a communication service for a user. Specifically, the target relay terminal, the candidate relay terminal, the relay terminal, or the terminal device 30 may be user equipment (user equipment, UE), an access terminal, a subscriber unit, a subscriber station, a mobile station, a remote station, a remote terminal, a mobile device, a terminal, a wireless communication device, a user agent, or a user apparatus. The relay terminal or the terminal device may alternatively be an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The target relay terminal, the candidate relay terminal, the relay terminal, or the terminal device 30 may alternatively be a device-to-device (device to device, D2D) device, for example, an electric meter or a water meter. Alternatively, the target relay terminal, the candidate relay terminal, the relay terminal, or the terminal device 30 may be a terminal in a 5G system, or may be a terminal in a next-generation communication system. This is not limited in this embodiment of this application.

Optionally, the devices (for example, the source access network device 10, the target access network device 20, the terminal device 30, the target relay terminal (for example, the target relay terminal 40 or the target relay terminal 50), the candidate relay terminal, and the relay terminal (for example, the relay terminal 50 or the relay terminal 60)) in FIG. 1 may be implemented by one device, or may be implemented by a plurality of devices together, or may be a functional module in one device. This is not specifically limited in this embodiment of this application. It may be understood that the foregoing function may be a network element in a hardware device, a software function running on dedicated hardware, or a virtualization function instantiated on a platform (for example, a cloud platform).

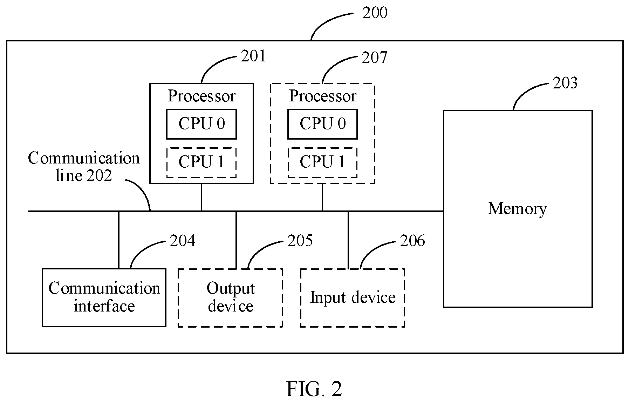

For example, each device in FIG. 1 may be implemented by a communication apparatus 200 in FIG. 2. FIG. 2 is a diagram of a hardware structure of a communication apparatus applicable to an embodiment of this application. The communication apparatus 200 includes at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path, and the path is used to transmit information between the foregoing components.

The communication interface 204 may be any apparatus (such as an antenna) such as a transceiver, and is configured to communicate with another device or a communication network. The communication network may be an Ethernet, a RAN, a wireless local area network (wireless local area network, WLAN), or the like.

The memory 203 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disc storage, an optical disk storage (including a compact optical disc, a laser disc, an optical disc, a digital versatile optical disc, a Blu-ray disc, and the like), a magnetic disk storage medium or another magnetic storage device, or any other medium capable of carrying or storing desired program code in a form of instructions or a data structure and capable of being accessed by a computer, but the memory is not limited thereto. The memory may exist independently, and is connected to the processor through the communication line 202. The memory may alternatively be integrated with the processor. The memory provided in embodiments of this application may be usually non-volatile.

The memory 203 is configured to store computer-executable instructions for executing the solutions in this application, and the processor 201 controls the execution. The processor 201 is configured to execute the computer-executable instructions stored in the memory 203 to implement the method provided in the following embodiments of this application.

Optionally, the computer-executable instructions in this embodiment of this application may also be referred to as application program code. This is not specifically limited in this embodiment of this application.

In a possible implementation, the processor 201 may include one or more CPUs, for example, a CPU 0 and a CPU 1 in FIG. 2.

In a possible implementation, the communication apparatus 200 may include a plurality of processors, for example, the processor 201 and a processor 207 in FIG. 2. Each of the processors may be a single-core (single-CPU) processor or a multi-core (multi-CPU) processor. The processor herein may be one or more devices, circuits, and/or processing cores configured to process data (for example, computer program instructions).

In a possible implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensor device.

The foregoing communication apparatus 200 may be a general-purpose device or a special-purpose device. During specific implementation, the communication apparatus 200 may be a desktop computer, a portable computer, a network server, a personal digital assistant (personal digital assistant, PDA), a mobile phone, a tablet computer, a wireless terminal device, an embedded device, or a device having a structure similar to that in FIG. 2. A type of the communication apparatus 200 is not limited in this embodiment of this application.

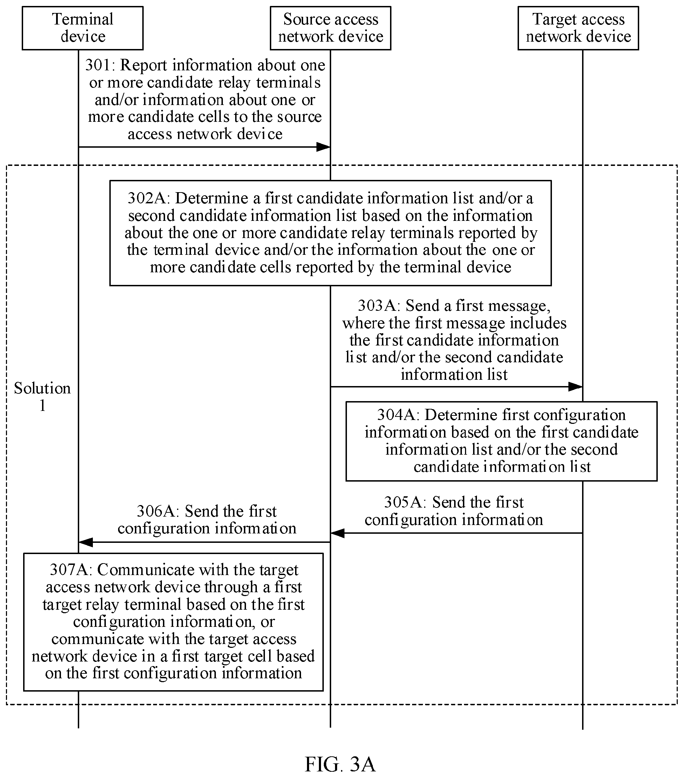

It should be noted that in this application, the first access network device may be referred to as a target access network device, and the second access network device may be referred to as a source access network device, or another name may be used. This is not limited herein. It should be understood that a source access network device in FIG. 3A to FIG. 3E may be, for example, the source access network device 10 in FIG. 1; a target access network device in FIG. 3A to FIG. 3E may be, for example, the target access network device 20 in FIG. 1; a terminal device in FIG. 3A to FIG. 3E may be, for example, the terminal device 30 in FIG. 1; a candidate relay terminal in FIG. 3A to FIG. 3E may be, for example, the candidate relay terminal in FIG. 1; a target relay terminal in FIG. 3A to FIG. 3E may be, for example, the target relay terminal in FIG. 1; and a relay terminal in FIG. 3A to FIG. 3E may be, for example, the relay terminal in FIG. 1.

FIG. 3A is a schematic flowchart of a communication method according to an embodiment of this application. As shown in FIG. 3A, the method includes but is not limited to the following steps.

301: A terminal device reports information about one or more candidate relay terminals and/or information about one or more candidate cells to a source access network device.

Correspondingly, the source access network device receives the information about the one or more candidate relay terminals reported by the terminal device and/or the information about the one or more candidate cells reported by the terminal device.

Optionally, step 301 may include: When link quality of a direct link on which the terminal device communicates with the source access network device is less than or equal to a first preset threshold, or link quality of an indirect link on which the terminal device communicates with the source access network device through a relay terminal is less than or equal to a second preset threshold, the terminal device reports the information about the one or more candidate relay terminals and/or the information about the one or more candidate cells to the source access network device.

It should be understood that a quantity of candidate relay terminals reported by the terminal device to the source access network device may be one or more, and the one or more candidate relay terminals are located in one or more cells served by a target access network device.

In this application, that a plurality of candidate relay terminals are located in one or more cells served by the target access network device may be understood as, for example, one of the following: The plurality of candidate relay terminals are located in a same cell served by the target access network device, different candidate relay terminals in the plurality of candidate relay terminals are located in different cells served by the target access network device, and some of the plurality of candidate relay terminals are located in one cell served by the target access network device and some other of the plurality of candidate relay terminals are located in another cell served by the target access network device. For example, information about three candidate relay terminals is information about a candidate relay terminal 1, information about a candidate relay terminal 2, and information about a candidate relay terminal 3. In a possible implementation, the three candidate relay terminals are located in one cell served by the target access network device. In another possible implementation, the candidate relay terminal 1 is located in a cell 1 served by the target access network device, the candidate relay terminal 2 is located in a cell 2 served by the target access network device, and the candidate relay terminal 3 is located in a cell 3 served by the target access network device. In still another possible implementation, the candidate relay terminal 1 and the candidate relay terminal 2 are located in the cell 1 served by the target access network device, and the candidate relay terminal 3 is located in the cell 2 served by the target access network device.

In this application, information about a candidate relay terminal may include at least one of the following: an identifier of the candidate relay terminal, signal quality on a link between the terminal device and the candidate relay terminal, or an identifier of a serving cell of the candidate relay terminal.

Optionally, the identifier of the candidate relay terminal may include, for example, one or more of the following: an S-TMSI, a GUTI, an SUPI, an RNTI, a layer-2 identifier, a local identifier allocated by a network device to the candidate relay terminal, and the like.

The signal quality on the link between the terminal device and the candidate relay terminal may include at least one of the following: a reference signal received power, reference signal received quality, or a signal to interference plus noise ratio. In a possible implementation, the link between the terminal device and the candidate relay terminal is an SL. Signal quality on the SL between the terminal device and the candidate relay terminal may also be referred to as signal quality on a PC5 interface between the terminal device and the candidate relay terminal.

Optionally, an identifier of a serving cell of the candidate relay terminal may include, for example, at least one of the following: an NCI or an NCGI.

The quantity of the candidate cells reported by the terminal device to the source access network device may be one or more.

In this application, information about a candidate cell may include at least one of the following: an identifier of the candidate cell or signal quality between the terminal device and the target access network device in the candidate cell. The signal quality between the terminal device and the target access network device in the candidate cell may include at least one of the following: a reference signal received power, reference signal received quality, or a signal to interference plus noise ratio. It should be understood that the signal quality between the terminal device and the target access network device in the candidate cell may also be referred to as signal quality between the terminal device and the target access network device on a Uu interface in the candidate cell.

An identifier of the candidate cell may include, for example, at least one of the following: an NCI or an NCGI.

Optionally, before step 301, the method may further include: The terminal device receives measurement configuration information sent by the source access network device; and the terminal device measures signal quality on a link between the terminal device and one or more candidate relay terminals based on the measurement configuration information, and measures signal quality between the terminal device and the target access network device in one or more candidate cells. It should be understood that before the terminal device measures the signal quality on the link between the terminal device and the one or more candidate relay terminals based on the measurement configuration information, the terminal device may first perform a relay discovery process. In other words, the terminal device needs to receive a discovery message sent by a surrounding relay terminal, and then measure the signal quality on the link between the terminal device and the one or more candidate relay terminals based on the discovery message.

The measurement configuration information may include, for example, at least one of the following: a frequency of a cell to be measured by the terminal device or a type of signal quality that needs to be measured by the terminal device.

Optionally, after step 301, if the source access network device determines a first candidate information list and/or a second candidate information list based on the information about the one or more candidate relay terminals reported by the terminal device and/or the information about the one or more candidate cells reported by the terminal device, the first candidate information list and/or the second candidate information list are/is sent to the target access network device. The target access network device determines, based on the first candidate information list and/or the second candidate information list, to hand over the terminal device to a direct link, and the target access network device determines a target cell based on the second candidate information list; or the target access network device determines, based on the first candidate information list and/or the second candidate information list, to hand over the terminal device to an indirect link, and the target access network device determines a target relay terminal in a target cell based on the first candidate information list. Refer to the solution shown in FIG. 3A.

The first candidate information list includes information about the one or more candidate relay terminals. The one or more candidate relay terminals are located in one or more cells served by the target access network device.

Optionally, the information about the candidate relay terminal in the first candidate information list may be, for example, information about all candidate relay terminals reported by the terminal device, or the information about the candidate relay terminal in the first candidate information list may be, for example, information about some candidate relay terminals in the candidate relay terminals reported by the terminal device. For example, the terminal device reports information about 10 candidate relay terminals to the source access network device, and the first candidate information list may include the information about the 10 candidate relay terminals, or the first candidate information list may include information about 5 of the 10 candidate relay terminals.

It should be noted that in this application, the information about the candidate relay terminal in the first candidate information list may be the same as or partially the same as the information about the corresponding candidate relay terminal reported by the terminal device. For example, information about a candidate relay terminal A in the first candidate information list includes an identifier of the candidate relay terminal A, signal quality on a link between the terminal device and the candidate relay terminal A, and an identifier of a serving cell of the candidate relay terminal A; and information about the candidate relay terminal A reported by the terminal device includes the identifier of the candidate relay terminal A, the signal quality on the link between the terminal device and the candidate relay terminal A, and the identifier of the serving cell of the candidate relay terminal A. Therefore, it can be learned that the information about the candidate relay terminal A in the first candidate information list is the same as the information about the candidate relay terminal A reported by the terminal device. For another example, information about the candidate relay terminal A in the first candidate information list includes the identifier of the candidate relay terminal A and the identifier of the serving cell of the candidate relay terminal A; and information about the candidate relay terminal A reported by the terminal device includes the identifier of the candidate relay terminal A, the signal quality on the link between the terminal device and the candidate relay terminal A, and the identifier of the serving cell of the candidate relay terminal A. Therefore, it can be learned that the information about the candidate relay terminal A in the first candidate information list is partially the same as the information about the candidate relay terminal A reported by the terminal device.

Optionally, an arrangement order of information about candidate relay terminals in the first candidate information list may be determined by the source access network device based on signal quality on sidelinks between the terminal device and a plurality of candidate relay terminals. For example, the arrangement order of the information about the candidate relay terminals in the first candidate information list may be a sequence determined by the source access network device by sorting signal quality of the sidelinks between the terminal device and the plurality of candidate relay terminals in descending order of the signal quality. For another example, the arrangement order of the information about the candidate relay terminals in the first candidate information list may be a sequence determined by the source access network device by sorting signal quality of the sidelinks between the terminal device and the plurality of candidate relay terminals in ascending order of the signal quality. It should be understood that a specific rule used by the source access network device to determine the arrangement order of the information about the candidate relay terminals in the first candidate information list may be predefined in a protocol, or may be fixed, or may be negotiated by the target access network device and the source access network device. This is not limited herein.

The second candidate information list includes information about one or more candidate cells served by the target access network device. Optionally, information about candidate cells in the second candidate information list may be, for example, information about all candidate cells reported by the terminal device, or information about candidate cells in the second candidate information list may be, for example, information about some candidate cells in the candidate cells reported by the terminal device. For example, the terminal device reports information about 10 candidate cells to the source access network device, and the second candidate information list may include the information about the 10 candidate cells, or the second candidate information list may include information about 5 of the 10 candidate cells.

It should be noted that in this application, the information about the candidate cell in the second candidate information list may be the same as or partially the same as the information about the corresponding candidate cell reported by the terminal device. For example, information about a candidate cell A in the second candidate information list includes an identifier of the candidate cell A, or signal quality between the terminal device and the target access network device in the candidate cell A and an identifier of the candidate cell A; and information about the candidate cell A reported by the terminal device includes the identifier of the candidate cell A, or the signal quality between the terminal device and the target access network device in the candidate cell A and the identifier of the candidate cell A. Therefore, it can be learned that the information about the candidate cell A in the second candidate information list is the same as the information about the candidate cell A reported by the terminal device. For another example, information about the candidate cell A in the second candidate information list includes the identifier of the candidate cell A and the identifier of the candidate cell A, and information about the candidate cell A reported by the terminal device includes the identifier of the candidate cell A, or the signal quality between the terminal device and the target access network device in the candidate cell A and the identifier of the candidate cell A. Therefore, it can be learned that the information about the candidate cell A in the second candidate information list is partially the same as the information about the candidate cell A reported by the terminal device.

Optionally, an arrangement order of information about candidate cells in the second candidate information list may be determined by the source access network device based on signal quality between the terminal device and the target access network device in one or more candidate cells. For example, the arrangement order of the information about the candidate cells in the second candidate information list may be a sequence determined by the source access network device by sorting the signal quality between the terminal device and the target access network device in the one or more candidate cells in descending order of the signal quality. For another example, the arrangement order of the information about the candidate cells in the second candidate information list may be a sequence determined by the source access network device by sorting the signal quality between the terminal device and the target access network device in the one or more candidate cells in ascending order of the signal quality. It should be understood that a specific rule used by the source access network device to determine the arrangement order of the information about the candidate cells in the second candidate information list may be predefined in a protocol, or may be fixed, or may be negotiated by the target access network device and the source access network device. This is not limited herein.

It should be noted that in this application, the first candidate information list may be referred to as a candidate relay terminal information list (candidate relay UE info list), and the second candidate information list may be referred to as a candidate cell information list (candidate cell info list).

When the target access network device determines, based on the first candidate information list and the second candidate information list, to hand over the terminal device to the direct link or the indirect link, for example, when signal quality on an SL between the terminal device and the candidate relay terminal in the first candidate information list is lower than signal quality between the terminal device and the target access network device in the candidate cell in the second candidate information list, the target access network device determines to hand over the terminal device to the direct link. Alternatively, because the signal quality on the SL between the terminal device and the candidate relay terminal in the first candidate information list is less than a preset value, the target access network device determines to hand over the terminal device to the direct link. Alternatively, because the signal quality on the SL between the terminal device and the candidate relay terminal in the first candidate information list is greater than or equal to the preset value, the target access network device determines to hand over the terminal device to the indirect link. The preset value may be predefined in a protocol, or may be a fixed value or the like. This is not limited herein.

Optionally, after step 301, the source access network device determines, based on the information about the one or more candidate relay terminals reported by the terminal device, to hand over the terminal device to the indirect link, determines the first candidate information list, and sends the first candidate information list to the target access network device, but the target access network device determines the target relay terminal in the target cell. Refer to the solution shown in FIG. 3A. Alternatively, the source access network device determines, based on the information about the one or more candidate relay terminals reported by the terminal device and the information about the one or more candidate cells reported by the terminal device, to hand over the terminal device to the indirect link, determines the first candidate information list, and sends the first candidate information list to the target access network device, but the target access network device determines the target relay terminal in the target cell. Refer to the solution shown in FIG. 3A.

When the source access network device determines, based on the information about the one or more candidate relay terminals reported by the terminal device and the information about the one or more candidate cells reported by the terminal device, to hand over the terminal device to the direct link, for example, because the signal quality on the sidelink between the terminal device and the candidate relay terminal in the information about the one or more candidate relay terminals reported by the terminal device is lower than the signal quality between the terminal device in the candidate cell and the target access network device in the information about the one or more candidate cells reported by the terminal device, the source access network device determines to hand over the terminal device to the direct link. Alternatively, because the signal quality on the sidelink between the terminal device and the candidate relay terminal in the information about the one or more candidate relay terminals reported by the terminal device is higher than or equal to the signal quality between the terminal device in the candidate cell and the target access network device in the information about the one or more candidate cells reported by the terminal device, the source access network device determines to hand over the terminal device to the indirect link.

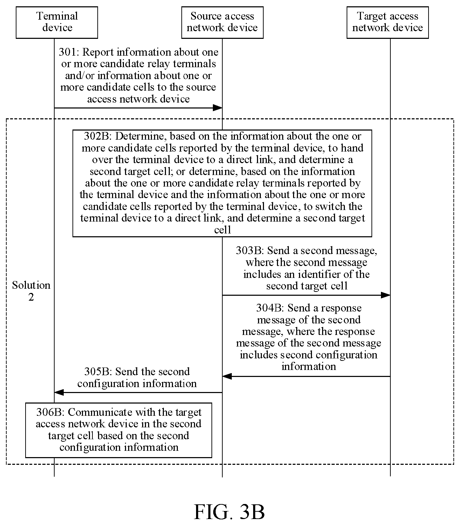

Optionally, after step 301, if the source access network device determines to hand over the terminal device to the direct link, and the source access network device determines the target cell, for details, refer to the solution shown in FIG. 3B.

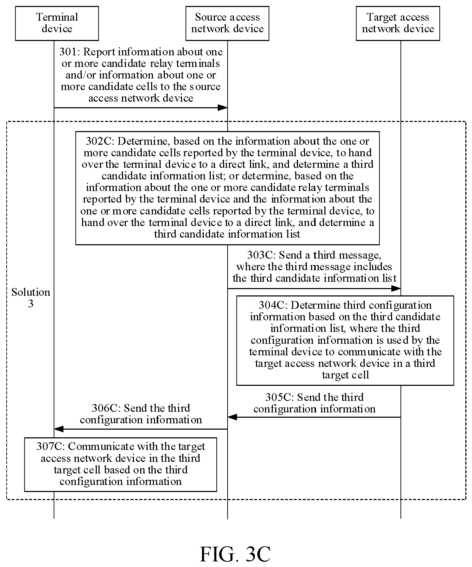

Optionally, after step 301, if the source access network device determines to hand over the terminal device to the direct link, but the target access network device determines the target cell, for details, refer to the solution shown in FIG. 3C.

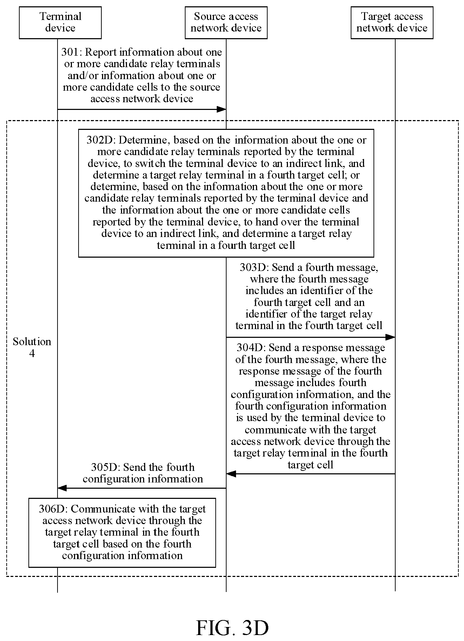

Optionally, after step 301, if the source access network device determines to hand over the terminal device to the indirect link, and the source access network device determines the target relay terminal in the target cell, for details, refer to the solution shown in FIG. 3D.

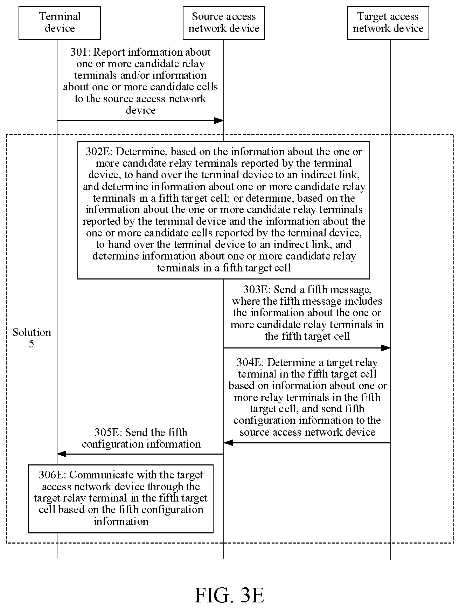

Optionally, after step 301, if the source access network device determines to hand over the terminal device to the indirect link, the source access network device determines the target cell, but the target access network device determines the target relay terminal in the target cell, for details, refer to the solution shown in FIG. 3E.

Refer to FIG. 3A. This embodiment of this application further describes the solution in which the target access network device determines the target relay terminal in the target cell and the solution in which the source access network device determines, based on the information about the one or more candidate relay terminals reported by the terminal device and the information about the one or more candidate cells reported by the terminal device, to hand over the terminal device to the indirect link, determines the first candidate information list, and sends the first candidate information list to the target access network device, but the target access network device determines the target relay terminal in the target cell.

302A: The source access network device determines the first candidate information list and/or the second candidate information list based on the information about the one or more candidate relay terminals reported by the terminal device and/or the information about the one or more candidate cells reported by the terminal device.

That the source access network device determines the first candidate information list based on the information about the one or more candidate relay terminals reported by the terminal device and/or the information about the one or more candidate cells reported by the terminal device may be understood that the source access network device determines the first candidate information list based on the information about the one or more candidate relay terminals reported by the terminal device or the source access network device determines the first candidate information list based on the information about the one or more candidate relay terminals reported by the terminal device and the information about the one or more candidate cells reported by the terminal device. The source access network device determines the second candidate information list based on the information about the one or more candidate relay terminals reported by the terminal device and/or the information about the one or more candidate cells reported by the terminal device may be understood that the source access network device determines the second candidate information list based on the information about the one or more candidate cells reported by the terminal device or the source access network device determines the second candidate information list based on the information about the one or more candidate relay terminals reported by the terminal device and the information about the one or more candidate cells reported by the terminal device.

Optionally, step 302A may be replaced with that the source access network device determines, based on the information about the one or more candidate relay terminals reported by the terminal device, to hand over the terminal device to the indirect link, and determines the first candidate information list; or the source access network device determines, based on the information about the one or more candidate relay terminals reported by the terminal device and the information about the one or more candidate cells reported by the terminal device, to hand over the terminal device to the indirect link, and determines the first candidate information list.

303A: The source access network device sends a first message to the target access network device, where the first message includes the first candidate information list and/or the second candidate information list.

Correspondingly, the target access network device receives the first message sent by the source access network device. The first message may be, for example, a handover request (handover request) message.

When the first message includes the first candidate information list, the first candidate information list includes information about a plurality of candidate relay terminals, and the plurality of candidate relay terminals are located in one or more cells served by the target access network device. This means that the target access network device may learn of information, namely, the first candidate information list, required for handing over the terminal device to the indirect link. Therefore, the target access network device may determine, based on the first candidate information list, to hand over the terminal device to the indirect link. When the first message includes the second candidate information list, the second candidate information list includes information about one or more candidate cells served by the target access network device. This means that the target access network device may learn of information, namely, the second candidate information list, required for handing over the terminal device to the direct link. Therefore, the target access network device may determine to hand over the terminal device to the direct link. When the first message includes the first candidate information list and the second candidate information list, the target access network device may learn of information required for handing over the terminal device to the direct link or the indirect link. Therefore, the target access network device may determine to hand over the terminal device to the direct link or the indirect link.

Optionally, the first message further includes a first identifier. The first identifier includes at least one of the following: an identifier predefined in a protocol, an identifier of a cell in which any one of the one or more candidate relay terminals reported by the terminal device is located, an identifier of any candidate cell reported by the terminal device, an identifier of a cell recommended by the source access network device to the target access network device, or a random value determined by the source access network device. The first identifier may be, for example, a target cell global identifier. It can be learned that the first message may be a handover request message, and the first identifier may be a target cell global identifier in the handover request message. This is equivalent to reusing the handover request message. This may be compatible with an existing protocol, reduce impact on the existing protocol, and improve backward compatibility of the protocol.

In this application, the identifier predefined in the protocol may be, for example, a default identifier, for example, may be all 0 bits or all 1 bits.

Optionally, the identifier of the cell recommended by the source access network device to the target access network device may include at least one of the following: an identifier of a cell in which one or more of candidate relay terminals reported by the terminal device are located or an identifier of a candidate cell reported by the terminal device.

For example, if the first message includes the first candidate information list, the first identifier includes at least one of the following: the identifier predefined in the protocol, the identifier of the cell in which any one of the one or more candidate relay terminals reported by the terminal device is located, the identifier of the cell recommended by the source access network device to the target access network device, or the random value determined by the source access network device. Optionally, the identifier of the cell in which any one of the one or more candidate relay terminals reported by the terminal device is located may be included in the first candidate information list. The identifier of the cell recommended by the source access network device to the target access network device may be an identifier of a cell in which one or more of the candidate relay terminals reported by the terminal device are located. In this case, in a possible implementation, an identifier of a cell in which one or more of the candidate relay terminals reported by the terminal device are located may be included in the first candidate information list.

For another example, if the first message includes the second candidate information list, the first identifier includes at least one of the following: the identifier predefined in the protocol, the identifier of the cell in which any one of the one or more candidate relay terminals reported by the terminal device is located, the identifier of any candidate cell reported by the terminal device, the identifier of the cell recommended by the source access network device to the target access network device, or the random value determined by the source access network device. Optionally, the identifier of any candidate cell reported by the terminal device may be included in the second candidate information list. The identifier of the cell recommended by the source access network device to the target access network device may be an identifier of a candidate cell reported by the terminal device. In this case, in a possible implementation, information about a candidate cell reported by the terminal device may be included in the second candidate information list.

For another example, if the first message includes the first candidate information list and the second candidate information list, the first identifier includes at least one of the following: the identifier predefined in the protocol, the identifier of any candidate cell reported by the terminal device, the identifier of the cell recommended by the source access network device to the target access network device, or the random value determined by the source access network device. Optionally, the identifier of the cell in which any one of the one or more candidate relay terminals reported by the terminal device is located may be included in the first candidate information list, and the identifier of any candidate cell reported by the terminal device may be included in the second candidate information list. The identifier of the cell recommended by the source access network device to the target access network device may include an identifier of a cell in which one or more of the candidate relay terminals reported by the terminal device are located and an identifier of a candidate cell reported by the terminal device. In this case, in a possible implementation, information about a cell in which one or more of the candidate relay terminals reported by the terminal device are located may be included in the first candidate information list, and information about a candidate cell reported by the terminal device may be included in the second candidate information list.

In a possible implementation, if the first identifier includes at least one of the following: the identifier predefined in the protocol, the identifier of the cell in which any one of the one or more candidate relay terminals reported by the terminal device is located, the identifier of any candidate cell reported by the terminal device, or the random value determined by the source access network device, the target access network device ignores a cell indicated by the first identifier. In this way, when participating in selection of a target relay terminal in a target cell or participating in selection of a target cell, the target access network device ignores the cell indicated by the first identifier.

In another possible implementation, if the target access network device obtains the first candidate information list and/or the second candidate information list, the target access network device ignores the cell indicated by the first identifier. This means that regardless of what is indicated by the first identifier, the target access network device directly ignores the cell indicated by the first identifier, so that the target access network device does not refer to the cell indicated by the first identifier when participating in selection of a target relay terminal in a target cell or participating in selection of a target cell. If the target access network device neither obtains the first candidate information list nor obtains the second candidate information list, the first identifier is an identifier of the target cell to which the terminal device is to be handed over.

It should be noted that in this application, that the target access network device ignores the cell indicated by the first identifier may be understood that when the target access network device obtains the first message, and the first message includes the first identifier, the target access network device ignores or does not refer to the cell indicated by the first identifier. Further, it may alternatively be understood that when determining the target relay terminal or the target cell, the target access network device ignores or does not refer to the cell indicated by the first identifier.

Optionally, the first message further includes first indication information. The first indication information indicates that the first identifier is the identifier predefined in the protocol; or the first indication information indicates that the first identifier is the identifier of the cell in which any one of the one or more candidate relay terminals reported by the terminal device is located; or the first indication information indicates that the first identifier is the identifier of any candidate cell reported by the terminal device; or the first indication information indicates that the first identifier is the identifier of the cell recommended by the source access network device to the target access network device; or the first indication information indicates that the first identifier is the random value determined by the source access network device. It can be learned that when the first identifier includes at least one of the following: the identifier predefined in the protocol, the identifier of the cell in which any one of the one or more candidate relay terminals reported by the terminal device is located, the identifier of any candidate cell reported by the terminal device, the identifier of the cell recommended by the source access network device to the target access network device, or the random value determined by the source access network device, the target access network device can learn of a specific type of the first identifier by using the first indication information.

Optionally, when step 302A is replaced with that the source access network device determines, based on the information about the one or more candidate relay terminals reported by the terminal device, to hand over the terminal device to the indirect link, and determines the first candidate information list, or when the source access network device determines, based on the information about the one or more candidate relay terminals reported by the terminal device and the information about the one or more candidate cells reported by the terminal device, to hand over the terminal device to the indirect link, and determines the first candidate information list, the first message in step 303A includes the first candidate information list.

Optionally, this solution may further include step 304A.

304A: The target access network device determines first configuration information based on the first candidate information list and/or the second candidate information list, where the first configuration information is used by the terminal device to communicate with the target access network device through a first target relay terminal, and the first target relay terminal is one of a plurality of candidate relay terminals; or the first configuration information is used by the terminal device to communicate with the target access network device in a first target cell, and the first target cell is a cell in one or more candidate cells.

In this application, that the first configuration information is used by the terminal device to communicate with the target access network device by using the first target relay terminal may be understood that the first configuration information is used by the terminal device to access a serving cell of the first target relay terminal and communicate with the target access network device through the first target relay terminal.

Optionally, if the first configuration information is used by the terminal device to communicate with the target access network device through the first target relay terminal, the first configuration information may include, for example, an end-to-end bearer configuration between the terminal device and the target access network device, an RLC bearer configuration between the terminal device and the first target relay terminal, and a mapping relationship between an end-to-end bearer and an RLC bearer.

In this application, the RLC bearer is a protocol entity and a configuration below an RLC layer, is a lower-layer part of an RB, and includes a series of resources such as an RLC layer entity and a logical channel. The RLC bearer may be classified as an RLC bearer between a terminal device and an access network device and an RLC bearer between terminal devices.

In a possible implementation, before step 304A, the method may further include: The target access network device determines the first target relay terminal based on the first candidate information list, where the first target relay terminal is one of the plurality of candidate relay terminals. This means that the target access network device may participate in selection of a target relay terminal in a target cell by using the first candidate information list, in other words, the target access network device may determine that a link to which the terminal device needs to be handed over is an indirect link. In this way, a better switching link can be selected for the terminal device, so that the success rate of link switching of the terminal device in different access network devices can be increased.

It should be understood that the first candidate information list includes information about a plurality of candidate relay terminals, the plurality of candidate relay terminals are located in one or more cells served by the target access network device, a serving cell of the first target relay terminal may be one of the one or more cells, and the first target relay terminal is one of the plurality of candidate relay terminals. For example, signal quality on a sidelink between the first target relay terminal and the terminal device may be signal quality on a sidelink between a candidate relay terminal in the plurality of candidate relay terminals and the terminal device, where the candidate relay terminal that has highest signal quality with the terminal device. For example, the first candidate information list includes information three candidate relay terminals: information about a candidate relay terminal 1, information about a candidate relay terminal 2, and information about a candidate relay terminal 3. Signal quality on a sidelink between the candidate relay terminal 1 and the terminal device is higher than signal quality on a sidelink between the candidate relay terminal 2 and the terminal device. The signal quality on the sidelink between the candidate relay terminal 1 and the terminal device is higher than signal quality on a sidelink between the candidate relay terminal and the terminal device. Therefore, the candidate relay terminal 1 may be used as the first target relay terminal.

Optionally, if the first identifier is the identifier of the cell recommended by the source access network device to the target access network device, that the target access network device determines the first target relay terminal based on the first candidate information list includes: The target access network device determines the first target relay terminal based on the first candidate information list and a cell indicated by the first identifier. It should be understood that the identifier of the cell recommended by the source access network device to the target access network device is an identifier of a cell in which one or more of the candidate relay terminals reported by the terminal device are located.

In another possible implementation, before step 304A, the method may further include: The target access network device determines the first target cell based on the second candidate information list. This means that the target access network device may further participate in selection of the target cell by using the second candidate information list, in other words, the target access network device may determine that a link to which the terminal device needs to be handed over is a direct link. In this way, a better switching link can be selected for the terminal device, so that the success rate of link switching of the terminal device in different access network devices can be increased.

Optionally, if the first identifier is the identifier of the cell recommended by the source access network device to the target access network device, that the target access network device determines the first target cell based on the second candidate information list includes: The target access network device determines the first target cell based on the second candidate information list and a cell indicated by the first identifier. It should be understood that the identifier of the cell recommended by the source access network device to the target access network device is an identifier a candidate cell reported by the terminal device.

It should be understood that the second candidate information list includes information about one or more candidate cells served by the target access network device, and the first target cell is a cell in the one or more candidate cells. For example, signal quality between the terminal device and the target access network device in the first target cell may be highest signal quality between the terminal device and the target access network device in the one or more candidate cells. For example, the second candidate information list includes information about three candidate cells: information about a candidate cell 1, information about a candidate cell 2, and information about a candidate cell 3. Signal quality between the terminal device and the target access network device in the candidate cell 1 is higher than signal quality between the terminal device and the target access network device in the candidate cell 2, and the signal quality between the terminal device and the target access network device in the candidate cell 2 is higher than signal quality between the terminal device and the target access network device in the candidate cell 3. Therefore, the candidate cell 1 may be used as the first target cell.

Optionally, the target access network device may further generate the first configuration information with reference to first information from the source access network device. The first information may be, for example, used by the terminal device to communicate with the source access network device. Specifically, the first information may include, for example, an end-to-end bearer configuration between the terminal device and the source access network device and a configuration required by the terminal device to access the source access network device through random access. Alternatively, the first information may be, for example, used by the terminal device to communicate with the source access network device through the relay terminal, and the first information may include, for example, an end-to-end bearer configuration between the terminal device and the source access network device, an RLC bearer configuration between the terminal device and a relay terminal, and a mapping relationship between an end-to-end bearer and an RLC bearer.

Optionally, when step 302A is replaced with that the source access network device determines, based on the information about the one or more candidate relay terminals reported by the terminal device, to hand over the terminal device to the indirect link, and determines the first candidate information list, or when the source access network device determines, based on the information about the one or more candidate relay terminals reported by the terminal device and the information about the one or more candidate cells reported by the terminal device, to hand over the terminal device to the indirect link, and determines the first candidate information list, step 304A may be replaced with that the target access network device determines the first configuration information based on the first candidate information list, where the first configuration information is used by the terminal device to communicate with the target access network device through the first target relay terminal.

Optionally, the solution provided in this embodiment may further include step 305A.

305A: The source access network device receives the first configuration information sent by the target access network device.

Correspondingly, the target access network device sends the first configuration information to the source access network device. The first configuration information may be, for example, carried in a response message of the first message, and the response message of the first message may be, for example, a handover request acknowledge (handover request acknowledge) message.

Optionally, when the target access network device determines to hand over the terminal device to the indirect link, after the target access network device sends the first configuration information to the source access network device, the method may further include: The target access network device sends a radio resource control relay reconfiguration message (RRC relaying reconfiguration message) to the first target relay terminal. The radio resource control relay reconfiguration message is used by the first target relay terminal to establish a bearer on which the terminal device communicates with the target access network device through the first target relay terminal. The radio resource control relay reconfiguration message includes at least one of the following: an RLC bearer configuration between the terminal device and the first target relay terminal, an RLC bearer configuration between the first target relay terminal and the target access network device, or a mapping relationship between the foregoing RLC bearer and an end-to-end bearer configuration between the terminal device and the target access network device.

306A: The terminal device receives the first configuration information sent by the source access network device.

Correspondingly, the source access network device sends the first configuration information to the terminal device. The first configuration information may be, for example, carried in a radio resource control reconfiguration message (RRC reconfiguration message).

307A: The terminal device communicates with the target access network device based on the first configuration information.

In a possible implementation, step 307A, for example, may include: The terminal device communicates with the target access network device through the first target relay terminal based on the first configuration information. It should be understood that before the terminal device communicates with the target access network device through the first target relay terminal based on the first configuration information, the method may further include: If the terminal device does not establish a link to the first target relay terminal, the terminal device establishes the link to the first target relay terminal, and sends a radio resource control reconfiguration complete message (RRC reconfiguration complete message) to the first target relay terminal on the link. When establishing a related bearer based on the radio resource control relay reconfiguration message, the first target relay terminal forwards the radio resource control reconfiguration complete message to the target access network device. The radio resource control reconfiguration complete message indicates that the bearer on which the terminal device communicates with the target access network device through the first target relay terminal has been successfully established.

In another possible implementation, step 307A, for example, may include: The terminal device communicates with the target access network device in the first target cell based on the first configuration information. It should be understood that before the terminal device communicates with the target access network device in the first target cell based on the first configuration information, the method may further include: The terminal device accesses the first target cell through random access, and sends a radio resource control reconfiguration complete message (RRC reconfiguration complete message) to the target access network device, where the radio resource control reconfiguration complete message indicates that a bearer between the terminal device and the target access network device in the first target cell has been successfully established.

It can be learned that in the solution provided in this embodiment, when the source access network device does not make a decision, and the target access network device determines to hand over the terminal device to the direct link or the indirect link, the target access network device may participate in selection of a target relay terminal in a target cell by using the first candidate information list from the source access network device, or the target access network device may participate in selection of the target cell by using the second candidate information list from the source access network device. In this way, a better switching link can be selected for the terminal device, so that the success rate of link switching of the terminal device in different access network devices can be increased.

Refer to FIG. 3B. An embodiment of this application further describes a solution in which a source access network device determines to hand over a terminal device to a direct link and the source access network device determines a target cell.

302B: The source access network device determines, based on information about one or more candidate cells reported by the terminal device, to hand over the terminal device to the direct link, and determines a second target cell; or the source access network device determines, based on information about one or more candidate relay terminals reported by the terminal device and information about one or more candidate cells reported by the terminal device, to hand over the terminal device to the direct link, and determines a second target cell.

Optionally, signal quality between the terminal device and a target access network device in the second target cell may be, for example, highest signal quality in the information about the one or more candidate cells reported by the terminal device.

303B: The source access network device sends a second message to the target access network device, where the second message includes an identifier of the second target cell, and the second message is used to request the target access network device to allow the terminal device to communicate with the target access network device in the second target cell. Correspondingly, the target access network device receives the second message sent by the source access network device. The second message may be, for example, a handover request message.

The identifier of the second target cell may be, for example, a target cell global identifier.

304B: The target access network device sends a response message of the second message to the source access network device, where the response message of the second message includes second configuration information, the second configuration information is used by the terminal device to communicate with the target access network device in the second target cell, and the response message of the second message indicates that the terminal device is allowed to communicate with the target access network device in the second target cell.

Correspondingly, the source access network device receives the response message that is of the second message and that is sent by the target access network device, where the response message of the second message may be, for example, a handover request acknowledge message.

The second configuration information is similar to the first configuration information used by the terminal device to communicate with the target access network device in the first target cell in the solution in the embodiment described in FIG. 3A. Details are not described herein again.

305B: The terminal device receives the second configuration information sent by the source access network device.

Correspondingly, the source access network device sends the second configuration information to the terminal device. The second configuration information may be, for example, carried in a radio resource control reconfiguration message.

306B: The terminal device communicates with the target access network device in the second target cell based on the second configuration information.

Step 306B is similar to step 306A in which the terminal device communicates with the target access network device in the first target cell based on the first configuration information. Details are not described herein again.

It can be learned that in this embodiment, when the source access network device determines, based on the information about the one or more candidate cells reported by the terminal device, to hand over the terminal device to the direct link, or when the source access network device determines, based on the information about the one or more candidate relay terminals reported by the terminal device and the information about the one or more candidate cells reported by the terminal device, to hand over the terminal device to the direct link, the source access network device may participate in selection of the target cell based on the information about the one or more candidate cells reported by the terminal device. In addition, after determining the target cell, the source access network device may request the target access network device to allow the terminal device to communicate with the target access network device in the second target cell, so that the terminal device can communicate with the target access network device in the second target cell after being allowed, thereby increasing the success rate of link switching of the terminal device in different access network devices.

Refer to FIG. 3C. An embodiment further describes a solution in which a source access network device determines to hand over a terminal device to a direct link, but a target access network device determines a target cell.

302C: The source access network device determines, based on information about one or more candidate cells reported by the terminal device, to hand over the terminal device to the direct link, and determines a third candidate information list; or the source access network device determines, based on information about one or more candidate relay terminals reported by the terminal device and information about one or more candidate cells reported by the terminal device, to hand over the terminal device to the direct link, and determines a third candidate information list.

The third candidate information list is similar to the second candidate information list in the solution in the embodiment shown in FIG. 3A. Details are not described herein again.

303C: The source access network device sends a third message to the target access network device, where the third message includes the third candidate information list.

Correspondingly, the target access network device receives the third message sent by the source access network device. The third message may be, for example, a handover request message.

Optionally, the third message further includes a second identifier. The second identifier includes at least one of the following: an identifier predefined in a protocol, an identifier of any candidate cell reported by the terminal device, an identifier of a cell recommended by the source access network device to the target access network device, or a random value determined by the source access network device. The third message may be, for example, a handover request message. The second identifier may be, for example, a target cell global identifier in the handover request message. This is equivalent to reusing the handover request message. This may be compatible with an existing protocol, reduce impact on the existing protocol, and improve backward compatibility of the protocol.

Optionally, the identifier of the cell recommended by the source access network device to the target access network device may be an identifier a candidate cell reported by the terminal device. In a possible implementation, information about a candidate cell reported by the terminal device may be included in the third candidate information list.

In a possible implementation, if the second identifier includes at least one of the following: the identifier predefined in the protocol, the identifier of any candidate cell reported by the terminal device, or the random value determined by the source access network device, the target access network device ignores a cell indicated by the second identifier. In this way, when participating in selection of target cell, the target access network device ignores the cell indicated by the second identifier.

In another possible implementation, if the target access network device obtains the third candidate information list, the target access network device ignores the cell indicated by the second identifier. This means that regardless of what is indicated by the second identifier, the target access network device directly ignores the cell indicated by the second identifier, so that the target access network device does not refer to the cell indicated by the second identifier when participating in selection of the target cell. If the target access network device does not obtain the third candidate information list, the second identifier is an identifier of the target cell to which the terminal device is to be handed over.

It should be noted that in this application, that the target access network device ignores the cell indicated by the second identifier may be understood that when the target access network device obtains the third message, and the third message includes the second identifier, the target access network device ignores or does not refer to the cell indicated by the second identifier. Further, it may alternatively be understood that when determining the target relay terminal or the target cell, the target access network device ignores or does not refer to the cell indicated by the second identifier.

Optionally, the third message further includes second indication information. The second indication information indicates that the second identifier is the identifier predefined in the protocol, or the second indication information indicates that the second identifier is the identifier of any candidate cell reported by the terminal device, or the second indication information indicates that the second identifier is the identifier of the cell recommended by the source access network device to the target access network device, or the second indication information indicates that the second identifier is the random value determined by the source access network device. It can be learned that when the second identifier includes at least one of the following: the identifier predefined in the protocol, the identifier of any candidate cell reported by the terminal device, the identifier of the cell recommended by the source access network device to the target access network device, or the random value determined by the source access network device, the target access network device can learn of a specific type of the second identifier by using the second indication information.

304C: The target access network device determines third configuration information based on the third candidate information list, where the third configuration information is used by the terminal device to communicate with the target access network device in a third target cell.

Step 304C is similar to step 304A in which the target access network device determines the first target cell based on the second candidate information list. Details are not described herein again.

The third configuration information is similar to the first configuration information used by the terminal device to communicate with the target access network device in the first target cell in the solution shown in FIG. 3A. Details are not described herein again.

305C: The source access network device receives the third configuration information sent by the target access network device.

Correspondingly, the target access network device sends the third configuration information to the source access network device. The third configuration information may be, for example, carried in a response message of the third message, and the response message of the third message may be, for example, a handover request acknowledge message.

306C: The terminal device receives the third configuration information sent by the source access network device.

Correspondingly, the source access network device sends the third configuration information to the terminal device. The third configuration information may be, for example, carried in a radio resource control reconfiguration message.

307C: The terminal device communicates with the target access network device in the third target cell based on the third configuration information.

For step 307C, refer to step 306B. Details are not described herein again.

It can be learned that in the solution shown in this embodiment, when the source access network device determines, based on the information about the one or more candidate cells reported by the terminal device, to hand over the terminal device to the direct link, or when the source access network device determines, based on the information about the one or more candidate relay terminals reported by the terminal device and the information about the one or more candidate cells reported by the terminal device, to hand over the terminal device to the direct link, the target access network device may participate in selection of the target cell by using the third candidate information list from the source access network device. This can increase the success rate of link switching of the terminal device in different access network devices.

Refer to FIG. 3D. An embodiment of this application further provides a solution in which a source access network device determines to hand over a terminal device to an indirect link, and the source access network device determines a target relay terminal in a target cell.

302D: The source access network device determines, based on information about one or more candidate relay terminals reported by the terminal device, to hand over the terminal device to the indirect link, and determines a target relay terminal in a fourth target cell; or the source access network device determines, based on information about one or more candidate relay terminals reported by the terminal device and information about one or more candidate cells reported by the terminal device, to hand over the terminal device to the indirect link, and determines a target relay terminal in a fourth target cell.

Optionally, signal quality on a sidelink between the target relay terminal in the fourth target cell and the terminal device may be highest signal quality in the information about the one or more candidate relay terminals reported by the terminal device.

303D: The source access network device sends a fourth message to a target access network device, where the fourth message includes an identifier of the fourth target cell and an identifier of the target relay terminal in the fourth target cell, and the fourth message is used to request the target access network device to allow the terminal device to communicate with the target access network device through the target relay terminal in the fourth target cell.

Correspondingly, the target access network device receives the fourth message sent by the source access network device. The fourth message may be, for example, a handover request message.

In a possible implementation, the identifier of the fourth target cell may be, for example, a target cell global identifier, and the identifier of the target relay terminal in the fourth target cell may be, for example, a target relay terminal identifier (target relay UE ID). In this way, an identifier defined in an existing protocol is used, thereby reducing impact on the existing protocol.

In another possible implementation, the identifier of the fourth target cell may be, for example, a preset target cell identifier; and the identifier of the target relay terminal in the fourth target cell may be, for example, a preset target relay terminal identifier. The preset target cell identifier and the preset target relay terminal identifier may be, for example, identifiers newly added to the fourth message. In this case, the fourth message may further include a third identifier. The third identifier may include at least one of the following: an identifier predefined in a protocol, an identifier of a cell in which any one of the one or more candidate relay terminals reported by the terminal device is located, an identifier of any candidate cell reported by the terminal device, or a random value determined by the source access network device. It should be understood that if the target access network device obtains the preset target cell identifier and the third identifier, or the target access network device obtains the third identifier, the target access network device ignores a cell indicated by the third identifier. The third identifier may be, for example, a target cell global identifier. It can be learned that the fourth message may be a handover request message, and the third identifier may be a target cell global identifier in the handover request message. This is equivalent to reusing the handover request message. This may be compatible with an existing protocol, reduce impact on the existing protocol, and improve backward compatibility of the protocol. In addition, when participating in selection of a target relay terminal in a target cell or participating in selection of a target cell, the target access network device does not refer to the cell indicated by the third identifier.

It should be noted that in this application, that the target access network device ignores the cell indicated by the third identifier may be understood that when the target access network device obtains the fourth message, and the fourth message includes the third identifier, the target access network device ignores or does not refer to the cell indicated by the third identifier. Further, it may alternatively be understood that when determining the target relay terminal or the target cell, the target access network device ignores or does not refer to the cell indicated by the third identifier.

304D: The target access network device sends a response message of the fourth message to the source access network device, where the response message of the fourth message includes fourth configuration information, the fourth configuration information is used by the terminal device to communicate with the target access network device through the target relay terminal in the fourth target cell, and the response message of the fourth message indicates that the terminal device is allowed to communicate with the target access network device through the target relay terminal in the fourth target cell.

Correspondingly, the source access network device receives the response message that is of the fourth message and that is sent by the target access network device, where the response message of the fourth message may be, for example, a handover request acknowledge message.

The fourth configuration information is similar to the first configuration information used by the terminal device to communicate with the target access network device through the first target relay terminal in the solution shown in FIG. 3A. Details are not described herein again.

305D: The terminal device receives the fourth configuration information sent by the source access network device.

Correspondingly, the source access network device sends the fourth configuration information to the terminal device. The fourth configuration information may be, for example, carried in a radio resource control reconfiguration message.

306D: The terminal device communicates with the target access network device through the target relay terminal in the fourth target cell based on the fourth configuration information.

Step 306D is similar to step 306A in which the terminal device communicates with the target access network device through the first target relay terminal based on the first configuration information. Details are not described herein again.

It can be learned that in the solution shown in this embodiment, when the source access network device determines, based on the information about the one or more candidate relay terminals reported by the terminal device, to hand over the terminal device to the indirect link, or when the source access network device determines, based on the information about the one or more candidate relay terminals reported by the terminal device and the information about the one or more candidate cells reported by the terminal device, to hand over the terminal device to the indirect link, the source access network device may participate in selection of the target relay terminal in the target cell based on the information about the one or more candidate cells reported by the terminal device. In addition, after determining the target relay terminal in the target cell, the source access network device may request the target access network device to allow the terminal device to communicate with the target access network device through the target relay terminal in the fourth target cell, so that the terminal device can communicate with the target access network device through the target relay terminal in the fourth target cell after being allowed, thereby increasing the success rate of link switching of the terminal device in different access network devices.

Refer to FIG. 3E. An embodiment of this application further describes a solution in which a source access network device determines to hand over a terminal device to an indirect link, the source access network device determines a target cell, and a target access network device determines a target relay terminal in the target cell.

302E: The source access network device determines, based on information about one or more candidate relay terminals reported by the terminal device, to hand over the terminal device to the indirect link, and determines information about one or more candidate relay terminals in a fifth target cell; or the source access network device determines, based on information about one or more candidate relay terminals reported by the terminal device and information about one or more candidate cells reported by the terminal device, to hand over the terminal device to the indirect link, and determines information about one or more candidate relay terminals in a fifth target cell.

It should be understood that the one or more candidate relay terminals in the fifth target cell may be, for example, all candidate relay terminals in the fifth target cell among the one or more candidate relay terminals reported by the terminal device, or may be some candidate relay terminals in the fifth target cell among the one or more candidate relay terminals reported by the terminal device. This is not limited herein.

303E: The source access network device sends a fifth message to the target access network device, where the fifth message includes the information about the one or more candidate relay terminals in the fifth target cell.

Correspondingly, the target access network device receives the fifth message sent by the source access network device. The fifth message may be, for example, a handover request message.

It should be understood that the fifth message includes the information about the one or more candidate relay terminals in the fifth target cell. This indicates that the source access network device has selected a target cell, but the target relay terminal device needs to be determined by the target access network device.

The fifth message may further include a fourth identifier.

In a possible implementation, the fourth identifier is an identifier of the fifth target cell. In this way, an identifier defined in an existing protocol is used, thereby reducing impact on the existing protocol.

In another possible implementation, the information about the one or more candidate relay terminals in the fifth target cell is included in a fourth candidate information list. The fourth identifier may include at least one of the following: an identifier predefined in a protocol, an identifier of a cell in which any one of the one or more candidate relay terminals reported by the terminal device is located, an identifier of any candidate cell reported by the terminal device, or a random value determined by the source access network device. It should be understood that if the target access network device obtains the fourth candidate information list, or the target access network device obtains the fourth candidate information list and the fourth identifier, the target access network device ignores a cell indicated by the fourth identifier. In addition, if the fourth identifier includes at least one of the following: the identifier predefined in the protocol, the identifier of the cell in which any one of the one or more candidate relay terminals reported by the terminal device is located, the identifier of any candidate cell reported by the terminal device, or the random value determined by the source access network device, the target access network device also ignores the cell indicated by the fourth identifier. The fourth identifier may be, for example, a target cell global identifier. It can be learned that when the information about the one or more candidate relay terminals in the fifth target cell is included in the fourth candidate information list, the fourth identifier may be a target cell global identifier in the handover request message. This is equivalent to reusing the handover request message. This may be compatible with an existing protocol, reduce impact on the existing protocol, and improve backward compatibility of the protocol. In addition, when participating in selection of a target relay terminal in a target cell, the target access network device does not refer to the cell indicated by the fourth identifier.

It should be noted that in this application, that the target access network device ignores the cell indicated by the fourth identifier may be understood that when the target access network device obtains the fifth message, and the fifth message includes the fourth identifier, the target access network device ignores or does not refer to the cell indicated by the fourth identifier. Further, it may alternatively be understood that when determining the target relay terminal or the target cell, the target access network device ignores or does not refer to the cell indicated by the fourth identifier.

304E: The target access network device determines a target relay terminal in the fifth target cell based on information about one or more relay terminals in the fifth target cell, and sends fifth configuration information to the source access network device, where the fifth configuration information is used by the terminal device to communicate with the target access network device through the target relay terminal in the fifth target cell.

Correspondingly, the source access network device receives the fifth configuration information sent by the target access network device.

The fifth configuration information may be, for example, carried in a response message of the fifth message, and the response message of the fifth message may be, for example, a handover request acknowledge message.

The fifth configuration information is similar to the first configuration information used by the terminal device to communicate with the target access network device through the first target relay terminal in the solution shown in FIG. 3A. Details are not described herein again.

305E: The terminal device receives the fifth configuration information sent by the source access network device.

Correspondingly, the source access network device sends the fifth configuration information to the terminal device. The fifth configuration information may be, for example, carried in a radio resource control reconfiguration message.

306E: The terminal device communicates with the target access network device through the target relay terminal in the fifth target cell based on the fifth configuration information.

Step 306E is similar to step 306A in which the terminal device communicates with the target access network device through the first target relay terminal based on the first configuration information. Details are not described herein again.

It can be learned that in the solution shown in this embodiment, when the source access network device determines, based on the information about the one or more candidate relay terminals reported by the terminal device, to hand over the terminal device to the indirect link, or when the source access network device determines, based on the information about the one or more candidate relay terminals reported by the terminal device and the information about the one or more candidate cells reported by the terminal device, to hand over the terminal device to the indirect link, the source access network device may determine the information about the one or more candidate relay terminals in the fifth target cell based on the information about the one or more candidate cells reported by the terminal device, and sends the information about the one or more candidate relay terminals in the fifth target cell to the target access network device. This means that the source access network device can determine the target cell, and the target access network device can determine the target relay terminal in the target cell, so that the target access network device can participate in selection of the target relay terminal. In this way, a better target relay terminal can be selected for the terminal device.

The foregoing mainly describes the solutions provided in this application from a perspective of interaction between devices. It can be understood that in the foregoing implementations, to implement the foregoing functions, each device includes a corresponding hardware structure and/or software module for performing each function. A person skilled in the art should easily be aware that in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that such an implementation goes beyond the scope of this application.

In embodiments of this application, a target access network device, a source access network device, or a terminal device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that the module division in embodiments of this application is an example, and is merely logical function division. During actual implementation, another division manner may be used.

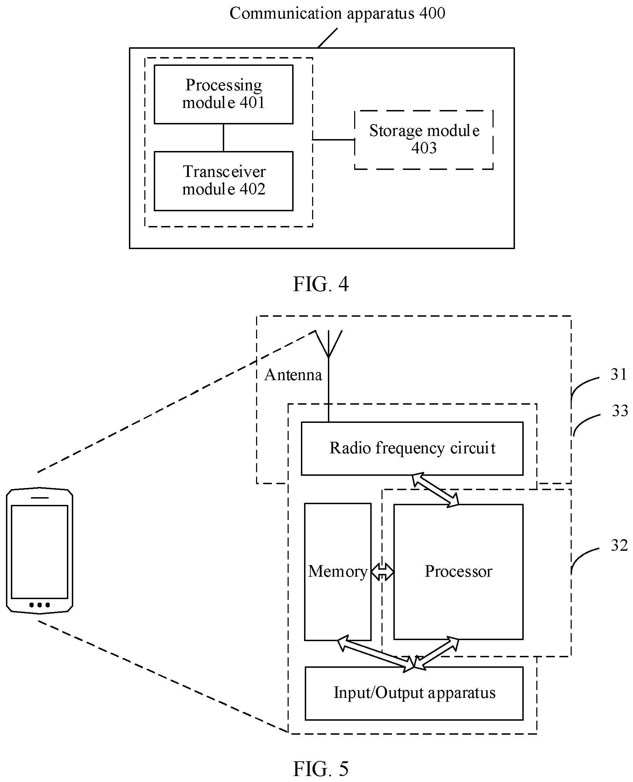

If the integrated module is used, refer to FIG. 4. FIG. 4 is a diagram of a structure of a communication apparatus according to an embodiment of this application. The communication apparatus 400 may be used in the method shown in any one of the embodiments in FIG. 3A to FIG. 3E. As shown in FIG. 4, the communication apparatus 400 includes a processing module 401 and a transceiver module 402. The processing module 401 may be one or more processors, and the transceiver module 402 may be a transceiver or a communication interface. The communication apparatus may be configured to implement the target access network device, the source access network device, or the terminal device in any one of the foregoing method embodiments, or may be configured to implement a function of the network element in any one of the foregoing method embodiments. The network element or network function may be a network element in a hardware device, a software function running on dedicated hardware, or a virtualization function instantiated on a platform (for example, a cloud platform). Optionally, the communication apparatus 400 may further include a storage module 403, configured to store program code and data of the communication apparatus 400.

In a possible implementation, when the communication apparatus is used as a target access network device or a chip used in a target access network device, the communication apparatus performs the steps performed by the target access network device in the foregoing method embodiment. The transceiver module 402 is configured to support communication with the source access network device, the terminal device, the relay terminal, or the like. The transceiver module specifically performs a sending and/or receiving action performed by the target access network device in any one of the embodiments in FIG. 3A to FIG. 3E, for example, supports the target access network device in performing one or more steps such as step 305A and step 304B, and/or another process of the technology described in this specification. The processing module 401 may be configured to support the communication apparatus 400 in performing a processing action in the foregoing method embodiments, for example, support the target access network device in performing one or more steps such as step 304A and step 304C, and/or another process of the technology described in this specification.

Specifically, the transceiver module 402 is configured to receive a first message sent by the source access network device, where the first message includes a first candidate information list and/or a second candidate information list; the first candidate information list includes information about a plurality of candidate relay terminals, and the plurality of candidate relay terminals are located in one or more cells served by the target access network device; and the second candidate information list includes information about one or more candidate cells served by the target access network device. The processing module 401 is configured to determine first configuration information based on the first candidate information list and/or the second candidate information list, where the first configuration information is used by the terminal device to communicate with the target access network device through a first target relay terminal, and the first target relay terminal is one of the plurality of candidate relay terminals; or the first configuration information is used by the terminal device to communicate with the target access network device in the first target cell, and the first target cell is a cell in the one or more candidate cells. The target access network device sends first configuration information to the source access network device.

Optionally, the processing module 401 is further configured to determine the first target relay terminal based on the first candidate information list, where a serving cell of the first target relay terminal is one of the one or more cells.

Optionally, the processing module 401 is further configured to determine the first target cell based on the second candidate information list.

Optionally, the first message further includes a first identifier. The first identifier includes at least one of the following: an identifier predefined in a protocol, an identifier of a cell in which any one of the one or more candidate relay terminals reported by the terminal device is located, an identifier of any candidate cell reported by the terminal device, an identifier of a cell recommended by the source access network device to the target access network device, or a random value determined by the source access network device.

Optionally, if the first identifier includes at least one of the following: an identifier predefined in a protocol, an identifier of a cell in which any one of the one or more candidate relay terminals reported by the terminal device is located, an identifier of any candidate cell reported by the terminal device, or a random value determined by the source access network device, the processing module 401 is further configured to ignore a cell indicated by the first identifier.

Optionally, if the target access network device obtains the first candidate information list and/or the second candidate information list, the processing module 401 is further configured to ignore the cell indicated by the first identifier.

Optionally, if the first identifier is the identifier of the cell recommended by the source access network device to the target access network device, when determining the first target relay terminal based on the first candidate information list, the processing module 401 is configured to determine the first target relay terminal based on the first candidate information list and the cell indicated by the first identifier.

Optionally, if the first identifier is the identifier of the cell recommended by the source access network device to the target access network device, when determining the first target cell based on the second candidate information list, the processing module 401 is configured to determine the first target cell based on the second candidate information list and the cell indicated by the first identifier.

Optionally, the first message further includes first indication information. The first indication information indicates that the first identifier is the identifier predefined in the protocol; or the first indication information indicates that the first identifier is the identifier of the cell in which any one of the one or more candidate relay terminals reported by the terminal device is located; or the first indication information indicates that the first identifier is the identifier of any candidate cell reported by the terminal device; or the first indication information indicates that the first identifier is the identifier of the cell recommended by the source access network device to the target access network device; or the first indication information indicates that the first identifier is the random value determined by the source access network device.

In a possible implementation, when the communication apparatus is used as a source access network device or a chip used in a source access network device, the communication apparatus performs the steps performed by the source access network device in the foregoing method embodiment. The transceiver module 402 is configured to support communication with the target access network device, the terminal device, the relay terminal, or the like. The transceiver module specifically performs a sending and/or receiving action performed by the source access network device in any one of the embodiments in FIG. 3A to FIG. 3E, for example, supports the source access network device in performing one or more steps such as step 303A and step 303B, and/or another process of the technology described in this specification. The processing module 401 may be configured to support the communication apparatus 400 in performing a processing action in the foregoing method embodiments, for example, support the source access network device in performing one or more steps such as step 302A and step 302B, and/or another process of the technology described in this specification.

Specifically, the transceiver module 402 is configured to receive the information about the one or more candidate relay terminals reported by the terminal device and/or the information about the one or more candidate cells reported by the terminal device. The processing module 401 is configured to determine the first candidate information list and/or the second candidate information list based on the information about the one or more candidate relay terminals reported by the terminal device and/or the information about the one or more candidate cells reported by the terminal device. The first candidate information list includes information about a plurality of candidate relay terminals, and the plurality of candidate relay terminals are located in one or more cells served by the target access network device. The second candidate information list includes information about the one or more candidate cells served by the target access network device. The transceiver module 402 is further configured to send the first message to the target access network device. The first message includes the first candidate information list and/or the second candidate information list. The transceiver module 402 is further configured to receive the first configuration information sent by the target access network device. The first configuration information is used by the terminal device to communicate with the target access network device through the first target relay terminal, and the first target relay terminal is one of the plurality of candidate relay terminals; or the first configuration information is used by the terminal device to communicate with the target access network device in the first target cell, and the first target cell is a cell in the one or more candidate cells. The transceiver module 402 is further configured to send the first configuration information to the terminal device.

Optionally, the first message further includes a first identifier. The first identifier includes at least one of the following: an identifier predefined in a protocol, an identifier of a cell in which any one of the one or more candidate relay terminals reported by the terminal device is located, an identifier of any candidate cell reported by the terminal device, an identifier of a cell recommended by the source access network device to the target access network device, or a random value determined by the source access network device.

Optionally, the first message further includes first indication information. The first indication information indicates that the first identifier is the identifier predefined in the protocol; or the first indication information indicates that the first identifier is the identifier of the cell in which any one of the one or more candidate relay terminals reported by the terminal device is located; or the first indication information indicates that the first identifier is the identifier of any candidate cell reported by the terminal device; or the first indication information indicates that the first identifier is the identifier of the cell recommended by the source access network device to the target access network device; or the first indication information indicates that the first identifier is the random value determined by the source access network device.

In a possible implementation, when the communication apparatus is used as a terminal device or a chip used in a terminal device, the communication apparatus performs the steps performed by the terminal device in the foregoing method embodiments. The transceiver module 402 is configured to support communication with the target access network device, the source access network device, the relay terminal, or the like. The transceiver module specifically performs a sending and/or receiving action performed by the terminal device in any one of the embodiments in FIG. 3A to FIG. 3E, for example, supports the terminal device in performing one or more steps such as step 301 and step 306A, and/or another process of the technology described in this specification. The processing module 401 may be configured to support the communication apparatus 400 in performing a processing action in the foregoing method embodiments, for example, support the terminal device in performing one or more steps such as step 307A and step 306B, and/or another process of the technology described in this specification.

Specifically, the transceiver module 402 is configured to report information about one or more candidate relay terminals and/or information about one or more candidate cells to the source access network device. The transceiver module 402 is further configured to receive the first configuration information sent by the source access network device. The processing module 401 is configured to communicate with the target access network device through the first target relay terminal based on the first configuration information or communicate with the target access network device in the first target cell based on the first configuration information. The first configuration information is determined by the target access network device based on the first message sent by the source access network device. The first message includes the first candidate information list and/or the second candidate information list. The first candidate information list is determined by the source access network device based on the information about the one or more candidate relay terminals reported by the terminal device. The second candidate information list is determined by the source access network device based on the information about the one or more candidate cells reported by the terminal device. The first candidate information list includes information about a plurality of candidate relay terminals. The plurality of candidate relay terminals are located in one or more cells served by the target access network device. The first target relay terminal is one of the plurality of candidate relay terminals. The second candidate information list includes information about the one or more candidate cells served by the target access network device. The first target cell is a cell in the one or more candidate cells.

Optionally, the first message further includes a first identifier. The first identifier includes at least one of the following: an identifier predefined in a protocol, an identifier of a cell in which any one of the one or more candidate relay terminals reported by the terminal device is located, an identifier of any candidate cell reported by the terminal device, an identifier of a cell recommended by the source access network device to the target access network device, or a random value determined by the source access network device.

Optionally, the first message further includes first indication information. The first indication information indicates that the first identifier is the identifier predefined in the protocol; or the first indication information indicates that the first identifier is the identifier of the cell in which any one of the one or more candidate relay terminals reported by the terminal device is located; or the first indication information indicates that the first identifier is the identifier of any candidate cell reported by the terminal device; or the first indication information indicates that the first identifier is the identifier of the cell recommended by the source access network device to the target access network device; or the first indication information indicates that the first identifier is the random value determined by the source access network device.

In a possible implementation, when the target access network device, the source access network device, or the terminal device is a chip, the transceiver module 402 may be a communication interface, a pin, a circuit, or the like. The communication interface may be configured to input to-be-processed data into a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 401 may be a processor. The processor may execute computer-executable instructions stored in a storage module, so that the chip performs the method according to any one of the embodiments in FIG. 3A to FIG. 3E.

Further, the processor may include a controller, an arithmetic unit, and a register. For example, the controller is mainly responsible for decoding instructions, and transmitting a control signal for operations corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an application-specific integrated circuit (application-specific integrated circuits, ASIC) architecture, a microprocessor without interlocked piped stages architecture (microprocessor without interlocked piped stages architecture, MIPS), an advanced reduced instruction set computing machine (advanced RISC machines, ARM) architecture, a network processor (network processor, NP) architecture, or the like. The processor may be a single-core or multi-core processor.

The storage module may be a storage module inside the chip, for example, a register or a cache. Alternatively, the storage module may be a storage module located outside the chip, for example, a read-only memory (Read-Only Memory, ROM), another type of static storage device that can store static information and instructions, or a random access memory (Random Access Memory, RAM).

It should be noted that a function corresponding to each of the processor and the interface may be implemented by using a hardware design, may be implemented by using a software design, or may be implemented by a combination of software and hardware. This is not limited herein.

FIG. 5 is a simplified diagram of a structure of a terminal device according to an embodiment of this application. For ease of understanding and illustration, in FIG. 5, a mobile phone is used as an example of the terminal device. As shown in FIG. 5, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and so on. The terminal device may further include a memory. The memory is mainly configured to store a software program and data. These related programs may be loaded into the memory when the communication apparatus is delivered from a factory, or may be loaded into the memory when needed later. The radio frequency circuit is mainly configured to: perform conversion between a baseband signal and a radio frequency signal, and process the radio frequency signal. The antenna is mainly configured to receive/send a radio frequency signal in an electromagnetic wave form, and the antenna is the antenna provided in embodiments of this application. The input/output apparatus, for example, a touchscreen, a display, or a keyboard, is mainly configured to: receive data input by a user and output the data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 5 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 5, the terminal device includes a receiving module 31, a processing module 32, and a sending module 33. The receiving module 31 may also be referred to as a receiver, a receiving machine, a receiver circuit, or the like. The sending module 33 may also be referred to as a sender, a transmitter, a transmitter machine, a transmitter circuit, or the like. The processing module 32 may also be referred to as a processor, a processing board, a processing apparatus, or the like.

For example, the processing module 32 is configured to perform a function of the terminal device in any one of the embodiments in FIG. 3A to FIG. 3E.

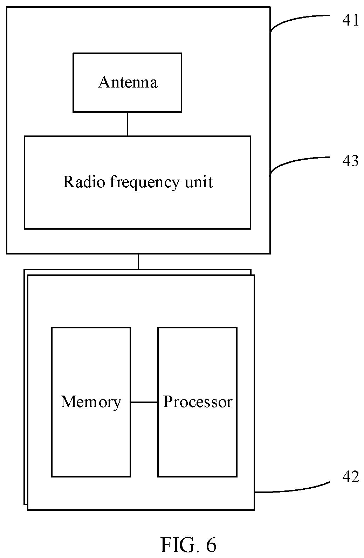

FIG. 6 is a simplified diagram of a structure of an access network device according to an embodiment of this application. The access network device includes a baseband part 42 and a part for radio frequency signal transmission/reception and conversion. The part for radio frequency signal transmission/reception and conversion further includes a receiving module 41 and a sending module 43 (which may also be collectively referred to as a transceiver module). The part for radio frequency signal transmission/reception and conversion is mainly configured to: send/receive a radio frequency signal and perform conversion between the radio frequency signal and a baseband signal. The baseband part 42 is mainly configured to: perform baseband processing, control the access network device, and so on. The receiving module 41 may also be referred to as a receiver, a receiving machine, a receiver circuit, or the like. The sending module 43 may also be referred to as a sender, a transmitter, a transmitter machine, a transmitter circuit, or the like. The baseband part 42 is usually a control center of the access network device, may also be referred to as a processing module, and is configured to perform the steps performed by the access network device (for example, the target access network device or the source access network device) in any one of the embodiments in FIG. 3A to FIG. 3E. For details, refer to the foregoing descriptions of the related parts.

The baseband part 42 may include one or more boards. Each board may include one or more processors and one or more memories. The processor is configured to read and execute a program in the memory to implement a baseband processing function and control the access network device. If there are a plurality of boards, the boards may be interconnected to improve a processing capability. In an optional implementation, the plurality of boards may share one or more processors, or the plurality of boards share one or more memories, or the plurality of boards share one or more processors at the same time.

For example, the sending module 43 is configured to perform a function of the access network device (for example, the target access network device or the source access network device) in any one of the embodiments in FIG. 3A to FIG. 3E.

An embodiment of this application further provides a communication apparatus, including a processor. The processor is coupled to a memory, and the memory stores a computer program. The processor is configured to invoke the computer program in the memory, so that the communication apparatus performs the method according to any one of the embodiments in FIG. 3A to FIG. 3E.

An embodiment of this application further provides a communication apparatus, including a processor and an interface circuit. The interface circuit is configured to: receive a signal from another communication apparatus other than the communication apparatus and transmit the signal to the processor, or send a signal from the processor to another communication apparatus other than the communication apparatus. The processor implements the method according to any one of the embodiments in FIG. 3A to FIG. 3E by using a logic circuit or by executing code instructions.

An embodiment of this application further provides a computer-readable storage medium. The storage medium stores a computer program or instructions. When the computer program or instructions are executed by a computer, the method according to any one of the embodiments in FIG. 3A to FIG. 3E is implemented.

An embodiment of this application further provides a computer program product. When a computer reads and executes the computer program product, the computer is enabled to perform the method according to any one of the embodiments in FIG. 3A to FIG. 3E.

The foregoing units described as separate parts may or may not be physically separate. Parts displayed as units may or may not be physical units, and may be located in one position or may be distributed on a plurality of network units. Some or all of the units may be selected based on an actual requirement to achieve the objectives of the solutions in embodiments of this application. In addition, the network element units in embodiments of this application may be integrated into one processing unit, or each of the units may exist alone physically, or two or more units are integrated into one unit. The integrated unit may be implemented in a form of hardware, or may be implemented in a form of a software network element unit.

When implemented in the form of a software network element unit and sold or used as an independent product, the integrated unit may be stored in a computer-readable storage medium. Based on such an understanding, an essentially contributing part in the technical solutions of this application, or all or some of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The foregoing storage medium includes any medium that can store program code, such as a USB flash drive, a removable hard disk drive, a read-only memory (ROM, Read-Only Memory), a random access memory (RAM, Random Access Memory), a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first access network device, a first message sent by a second access network device, wherein the first message comprises a first candidate information list and/or a second candidate information list, the first candidate information list comprises information about one or more candidate relay terminals, the one or more candidate relay terminals are located in one or more cells served by the first access network device, and the second candidate information list comprises information about one or more candidate cells served by the first access network device;
determining, by the first access network device, first configuration information based on the first candidate information list and/or the second candidate information list, wherein the first configuration information is for the terminal device to communicate with the first access network device through a first target relay terminal, and the first target relay terminal is one of the one or more candidate relay terminals; or the first configuration information is for the terminal device to communicate with the first access network device in a first target cell, and the first target cell is a cell in the one or more candidate cells; and
sending, by the first access network device, the first configuration information to the second access network device.

2. The method according to claim 1, wherein before the determining, by the first access network device, first configuration information based on the first candidate information list and/or the second candidate information list, the method further comprises:
determining, by the first access network device, the first target relay terminal based on the first candidate information list, wherein a serving cell of the first target relay terminal is one of the one or more cells.

3. The method according to claim 1, wherein before the determining, by the first access network device, first configuration information based on the first candidate information list and/or the second candidate information list, the method further comprises:
determining, by the first access network device, the first target cell based on the second candidate information list.

4. The method according to any one of claims 1 to 3, wherein the first message further comprises a first identifier;
the first identifier comprises at least one of the following: an identifier predefined in a protocol, an identifier of a cell in which any one of one or more candidate relay terminals reported by the terminal device is located, an identifier of any candidate cell reported by the terminal device, an identifier of a cell recommended by the second access network device to the first access network device, or a random value determined by the second access network device.

5. The method according to claim 4, wherein if the first identifier comprises at least one of the following: the identifier predefined in the protocol, the identifier of the cell in which any one of the one or more candidate relay terminals reported by the terminal device is located, the identifier of any candidate cell reported by the terminal device, or the random value determined by the second access network device, the first access network device ignores a cell indicated by the first identifier.

6. The method according to claim 4, wherein if the first access network device obtains the first candidate information list and/or the second candidate information list, the first access network device ignores a cell indicated by the first identifier.

7. The method according to claim 4, wherein if the first identifier is the identifier of the cell recommended by the second access network device to the first access network device, the determining, by the first access network device, the first target relay terminal based on the first candidate information list comprises:
determining, by the first access network device, the first target relay terminal based on the first candidate information list and a cell indicated by the first identifier.

8. The method according to claim 4, wherein if the first identifier is the identifier of the cell recommended by the second access network device to the first access network device, the determining, by the first access network device, the first target cell based on the second candidate information list comprises:
determining, by the first access network device, the first target cell based on the second candidate information list and a cell indicated by the first identifier.

9. The method according to claim 4, wherein the first message further comprises first indication information; and
the first indication information indicates that the first identifier is the identifier predefined in the protocol; or
the first indication information indicates that the first identifier is the identifier of the cell in which any one of the one or more candidate relay terminals reported by the terminal device is located; or
the first indication information indicates that the first identifier is the identifier of any candidate cell reported by the terminal device; or
the first indication information indicates that the first identifier is the identifier of the cell recommended by the second access network device to the first access network device; or
the first indication information indicates that the first identifier is the random value determined by the second access network device.

10. The method according to any one of claims 4 to 9, wherein the first message is a handover request message, and the identifier of the cell in which any one of the one or more candidate relay terminals reported by the terminal device is located, the identifier of any candidate cell reported by the terminal device, or the identifier of the cell recommended by the second access network device to the first access network device is a target cell global identifier.

11. A communication method, comprising:
receiving, by a second access network device, information about one or more candidate relay terminals reported by a terminal device and/or information about one or more candidate cells reported by the terminal device;
determining, by the second access network device, a first candidate information list and/or a second candidate information list based on the information about the one or more candidate relay terminals reported by the terminal device and/or the information about the one or more candidate cells reported by the terminal device, wherein the first candidate information list comprises information about one or more candidate relay terminals, the one or more candidate relay terminals are located in one or more cells served by a first access network device, and the second candidate information list comprises information about one or more candidate cells served by the first access network device;
sending, by the second access network device, a first message to the first access network device, wherein the first message comprises the first candidate information list and/or the second candidate information list;
receiving, by the second access network device, first configuration information sent by the first access network device, wherein the first configuration information is for the terminal device to communicate with the first access network device through a first target relay terminal, and the first target relay terminal is one of the plurality of candidate relay terminals; or the first configuration information is for the terminal device to communicate with the first access network device in a first target cell, and the first target cell is a cell in the one or more candidate cells; and
sending, by the second access network device, the first configuration information to the terminal device.

12. The method according to claim 11, wherein the first message further comprises a first identifier; and
the first identifier comprises at least one of the following: an identifier predefined in a protocol, an identifier of a cell in which any one of the one or more candidate relay terminals reported by the terminal device is located, an identifier of any candidate cell reported by the terminal device, an identifier of a cell recommended by the second access network device to the first access network device, or a random value determined by the second access network device.

13. The method according to claim 12, wherein the first message further comprises first indication information; and
the first indication information indicates that the first identifier is the identifier predefined in the protocol; or
the first indication information indicates that the first identifier is the identifier of the cell in which any one of the one or more candidate relay terminals reported by the terminal device is located; or
the first indication information indicates that the first identifier is the identifier of any candidate cell reported by the terminal device; or
the first indication information indicates that the first identifier is the identifier of the cell recommended by the second access network device to the first access network device; or
the first indication information indicates that the first identifier is the random value determined by the second access network device.

14. The method according to any one of claims 11 to 13, wherein the first message is a handover request message, and the identifier of the cell in which any one of the one or more candidate relay terminals reported by the terminal device is located, the identifier of any candidate cell reported by the terminal device, or the identifier of the cell recommended by the second access network device to the first access network device is a target cell global identifier.

15. A communication method, comprising:
reporting, by a terminal device, information about one or more candidate relay terminals and/or information about one or more candidate cells to a second access network device;
receiving, by the terminal device, first configuration information sent by the second access network device; and
communicating, by the terminal device, with a first access network device through a first target relay terminal based on the first configuration information, or communicating, by the terminal device, with the first access network device in a first target cell based on the first configuration information, wherein
the first configuration information is determined by the first access network device based on a first message sent by the second access network device, the first message comprises a first candidate information list and/or a second candidate information list, the first candidate information list is determined by the second access network device based on the information about the one or more candidate relay terminals reported by the terminal device, and the second candidate information list is determined by the second access network device based on the information about the one or more candidate cells reported by the terminal device;
the first candidate information list comprises information about one or more candidate relay terminals, the one or more candidate relay terminals are located in one or more cells served by the first access network device, and the first target relay terminal is one of the plurality of candidate relay terminals; and
the second candidate information list comprises information about one or more candidate cells served by the first access network device, and the first target cell is a cell in the one or more candidate cells.

16. The method according to claim 15, wherein the first message further comprises a first identifier; and
the first identifier comprises at least one of the following: an identifier predefined in a protocol, an identifier of a cell in which any one of the one or more candidate relay terminals reported by the terminal device is located, an identifier of any candidate cell reported by the terminal device, an identifier of a cell recommended by the second access network device to the first access network device, or a random value determined by the second access network device.

17. The method according to claim 16, wherein the first message further comprises first indication information; and
the first indication information indicates that the first identifier is the identifier predefined in the protocol; or
the first indication information indicates that the first identifier is the identifier of the cell in which any one of the one or more candidate relay terminals reported by the terminal device is located; or
the first indication information indicates that the first identifier is the identifier of any candidate cell reported by the terminal device; or
the first indication information indicates that the first identifier is the identifier of the cell recommended by the second access network device to the first access network device; or
the first indication information indicates that the first identifier is the random value determined by the second access network device.

18. The method according to any one of claims 15 to 17, wherein the first message is a handover request message, and the identifier of the cell in which any one of the one or more candidate relay terminals reported by the terminal device is located, the identifier of any candidate cell reported by the terminal device, or the identifier of the cell recommended by the second access network device to the first access network device is a target cell global identifier.

19. A communication method, comprising:
receiving, by a second access network device, information about one or more candidate relay terminals reported by a terminal device and/or information about one or more candidate cells reported by the terminal device;
determining, by the second access network device, a first candidate information list and/or a second candidate information list based on the information about the one or more candidate relay terminals reported by the terminal device and/or the information about the one or more candidate cells reported by the terminal device, wherein the first candidate information list comprises information about one or more candidate relay terminals, the one or more candidate relay terminals are located in one or more cells served by a first access network device, and the second candidate information list comprises information about one or more candidate cells served by the first access network device;
sending, by the second access network device, a first message to the first access network device, wherein the first message comprises the first candidate information list and/or the second candidate information list;
determining, by the first access network device, first configuration information based on the first candidate information list and/or the second candidate information list, wherein the first configuration information is for the terminal device to communicate with the first access network device through a first target relay terminal, and the first target relay terminal is one of the plurality of candidate relay terminals; or the first configuration information is for the terminal device to communicate with the first access network device in a first target cell, and the first target cell is a cell in the one or more candidate cells;
sending, by the first access network device, the first configuration information to the second access network device; and
sending, by the second access network device, the first configuration information to the terminal device.

20. The method according to claim 19, wherein before the determining, by the first access network device, first configuration information based on the first candidate information list and/or the second candidate information list, the method further comprises:
determining, by the first access network device, the first target relay terminal based on the first candidate information list.

21. The method according to claim 19, wherein before the determining, by the first access network device, first configuration information based on the first candidate information list and/or the second candidate information list, the method further comprises:
determining, by the first access network device, the first target cell based on the second candidate information list.

22. The method according to any one of claims 19 to 21, wherein the first message further comprises a first identifier; and
the first identifier comprises at least one of the following: an identifier predefined in a protocol, an identifier of a cell in which any one of the one or more candidate relay terminals reported by the terminal device is located, an identifier of any candidate cell reported by the terminal device, an identifier of a cell recommended by the second access network device to the first access network device, or a random value determined by the second access network device.

23. The method according to claim 22, wherein if the first identifier is the identifier of the cell recommended by the second access network device to the first access network device, the determining, by the first access network device, the first target relay terminal based on the first candidate information list comprises:
determining, by the first access network device, the first target relay terminal based on the first candidate information list and a cell indicated by the first identifier.

24. The method according to claim 22, wherein if the first identifier is the identifier of the cell recommended by the second access network device to the first access network device, the determining, by the first access network device, the first target cell based on the second candidate information list comprises:
determining, by the first access network device, the first target cell based on the second candidate information list and a cell indicated by the first identifier.

25. The method according to any one of claims 22 to 24, wherein the first message is a handover request message, and the identifier of the cell in which any one of the one or more candidate relay terminals reported by the terminal device is located, the identifier of any candidate cell reported by the terminal device, or the identifier of the cell recommended by the second access network device to the first access network device is a target cell global identifier.

26. A communication apparatus, wherein the communication apparatus comprises a module configured to perform the method according to any one of claims 1 to 25.

27. A communication apparatus, comprising a processor, wherein the processor is coupled to a memory, and the memory stores a computer program; and the processor is configured to invoke the computer program in the memory, so that the communication apparatus performs the method according to any one of claims 1 to 25.

28. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 25 by using a logic circuit or by executing code instructions.

29. A computer-readable storage medium, wherein the storage medium stores a computer program or instructions, and when the computer program or instructions are executed by a computer, the method according to any one of claims 1 to 25 is implemented.

30. A computer program product, wherein when a computer reads and executes the computer program product, the computer is enabled to perform the method according to any one of claims 1 to 25.
